(19)

Europäisches
Patentamt
European
Patent Office
Office européen
des brevets

(11)    **EP 3 904 934 A1**

(12)    **EUROPEAN PATENT APPLICATION**
published in accordance with Art. 153(4) EPC

(43) Date of publication:
**03.11.2021 Bulletin 2021/44**

(21) Application number: **19954966.8**

(22) Date of filing: **06.12.2019**

(51) Int Cl.:
*G02B 13/00* (2006.01)    *G02B 13/18* (2006.01)

(86) International application number:
**PCT/CN2019/123679**

(87) International publication number:
**WO 2021/109127 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Jiangxi Jingchao Optical Co., Ltd.**
**Nanchang, Jiangxi 330096 (CN)**

(72) Inventors:
• **WANG, Nini**
**Nanchang, Jiangxi 330096 (CN)**

• **LIU, Binbin**
**Nanchang, Jiangxi 330096 (CN)**
• **LI, Ming**
**Nanchang, Jiangxi 330096 (CN)**
• **ZOU, Hairong**
**Nanchang, Jiangxi 330096 (CN)**

(74) Representative: **Inchingalo, Simona**
**Bugnion S.p.A.**
**Viale Lancetti, 17**
**20158 Milano (IT)**

(54)    **OPTICAL SYSTEM, CAMERA MODULE, AND ELECTRONIC APPARATUS**

(57)    An optical system (10), sequentially comprising from an object side to an image side: a diaphragm (STO); a first lens (L1) having positive refractive power; a second lens (L2) having negative refractive power, an object-side surface (S3) of the second lens (L2) being convex in a paraxial region; a third lens (L3), a fourth lens (L4), and a fifth lens (L5) which have refractive power; and a sixth lens (L6) having negative refractive power, an image-side surface (S12) of the sixth lens (L6) being concave in a paraxial region. The optical system (10) satisfies the following relationship: (TTL-BFL)/f<0.92, TTL being a distance from an object-side surface (S1) of the first lens (L1) to an imaging surface (S15) of the optical system (10) on an optical axis, BFL being the shortest distance from the image-side surface (S12) of the sixth lens (L6) to the imaging surface (S15) in a direction parallel to the optical axis, and f being an effective focal length of the optical system (10).

FIG. 15

EP 3 904 934 A1

**Description**

## TECHNICAL FIELD

The present disclosure relates to the field of optical imaging, and particularly, to an optical system, a camera module, and an electronic device.

## BACKGROUND

With the innovation of technology, various portable electronic devices capable of photographing have been developed, and as consumers' demand for photographing high-quality images has gradually increased, the existing three-piece, four-piece, and five-piece camera modules have emerged technical bottleneck. Based on the same chip, in order to obtain higher image resolution, more lenses with complex surface shapes are generally used to eliminate aberrations. However, such structure undoubtedly increases the total length of the camera module and restricts the miniaturization design of the camera module.

## SUMMARY

According to various embodiments of the present disclosure, an optical system, a camera module, and an electronic device are provided.

The optical system includes, in order from an object side toward an image side: a stop; a first lens with a positive refractive power; a second lens with a negative refractive power, an object-side surface of the second lens being convex at a paraxial position; a third lens with a refractive power; a fourth lens with a refractive power; a fifth lens with a refractive power; and a sixth lens with a negative refractive power, an image-side surface of the sixth lens being concave at a paraxial position, wherein the optical system satisfies the following condition:

$$(TTL-BFL)/f<0.92$$

wherein TTL is a distance on an optical axis from an object-side surface of the first lens toward an imaging surface of the optical system, BFL is a shortest distance in a direction parallel to the optical axis from the image-side surface of the sixth lens toward the imaging surface of the optical system, and f is an effective focal length of the optical system.

The camera module includes a photosensitive element and the above-mentioned optical system, and the photosensitive element is arranged on an image side of the sixth lens.

The electronic device includes a housing and the above-mentioned camera module arranged on the housing.

The details of one or more embodiments of the present disclosure are set forth in the accompanying drawings and the description below. Other features, objects and advantages of the present disclosure will become apparent from the description, the accompanying drawings, and the claims.

## BRIEF DESCRIPTION OF THE DRAWINGS

To better describe and illustrate the embodiments and/or examples of the disclosure disclosed herein, reference may be made to one or more accompanying drawings. The additional details or examples used to describe the accompanying drawings are not to be construed as limiting the scope of any one of the disclosed disclosure, the presently described embodiments and/or examples, and the presently understood preferred mode of the disclosure.

FIG. 1 is a schematic diagram of an optical system according to a first embodiment of the present disclosure;
FIG. 2 shows diagrams of spherical aberration (mm), astigmatism (mm), and distortion (%) of the optical system in the first embodiment;
FIG. 3 is a schematic diagram of an optical system according to a second embodiment of the present disclosure;
FIG. 4 shows diagrams of spherical aberration (mm), astigmatism (mm), and distortion (%) of the optical system in the second embodiment;
FIG. 5 is a schematic diagram of an optical system according to a third embodiment of the present disclosure;
FIG. 6 shows diagrams of spherical aberration (mm), astigmatism (mm), and distortion (%) of the optical system in the third embodiment;
FIG. 7 is a schematic diagram of an optical system according to a fourth embodiment of the present disclosure;
FIG. 8 shows diagrams of spherical aberration (mm), astigmatism (mm), and distortion (%) of the optical system in the fourth embodiment;

FIG. 9 is a schematic diagram of an optical system according to a fifth embodiment of the present disclosure;
FIG. 10 shows diagrams of spherical aberration (mm), astigmatism (mm), and distortion (%) of the optical system in the fifth embodiment;
FIG. 11 is a schematic diagram of an optical system according to a sixth embodiment of the present disclosure;
FIG. 12 shows diagrams of spherical aberration (mm), astigmatism (mm), and distortion (%) of the optical system in the sixth embodiment;
FIG. 13 is a schematic diagram of an optical system according to a seventh embodiment of the present disclosure;
FIG. 14 shows diagrams of spherical aberration (mm), astigmatism (mm), and distortion (%) of the optical system in the seventh embodiment;
FIG. 15 is a schematic diagram of a camera module according to an embodiment of the present disclosure; and
FIG. 16 is a schematic diagram of an electronic device according to an embodiment of the present disclosure.

## DETAILED DESCRIPTION OF THE EMBODIMENTS

For the convenience of understanding the present disclosure, embodiments of the disclosure are described more fully hereinafter with reference to the accompanying drawings. Preferable embodiments of the present disclosure are presented in the accompanying drawings. However, the present disclosure may be embodied in many different forms and is not limited to the embodiments described herein. On the contrary, these embodiments are provided to make the understanding of the disclosure of the present disclosure more thorough.

It should be noted that when an element is referred to as being "fixed to" another element, it can be directly fixed to another element or indirectly connected to another element with a mediating element. When an element is considered to be "connected to" another element, it can be directly connected to another element or indirectly connected to another element with a mediating element. The terms "inside", "outside", "left", "right", and the like used herein are for illustrative purposes only and are not intended to indicate the only example.

With technological changes, various portable electronic devices capable of photographing have been developed, and as consumers' demand for photographing high-quality images has gradually increased, the existing three-piece, four-piece, and five-piece camera modules have emerged technical bottleneck. Based on the same chip, in order to obtain higher image resolution, more lenses with complex surface shapes are generally used to eliminate aberrations. However, such structure undoubtedly increases the total length of the camera module and restricts the miniaturization design of the camera module. In view of this, the embodiments of the present disclosure provide an optical system, a camera module, and an electronic device, in order to solve the problem that the camera module is difficult to be miniaturized.

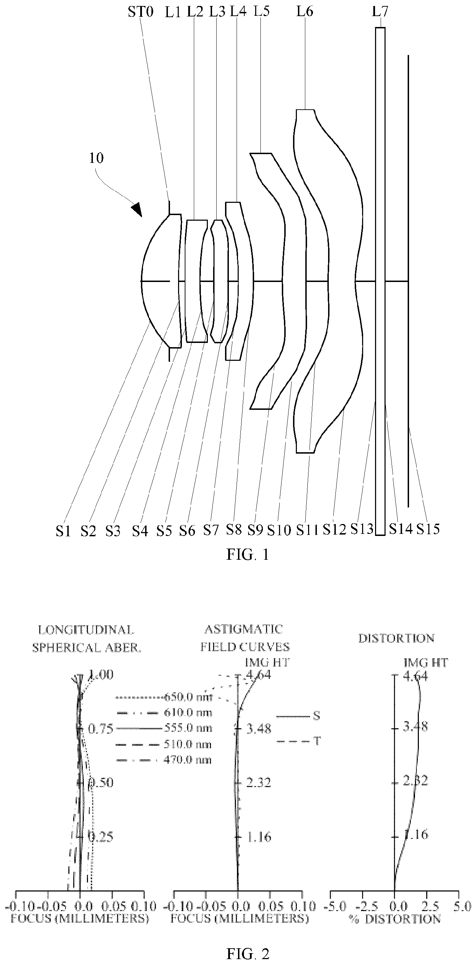

Referring to FIG. 1, the optical system 10 in an embodiment of the present disclosure includes, in order from an object side toward an image side, a stop STO, a first lens L1 with a positive refractive power, a second lens L2 with a negative refractive power, a third lens L3 with a refractive power, a fourth lens L4 with a refractive power, a fifth lens L5 with a refractive power, and a sixth lens L6 with a negative refractive power. The stop STO is arranged coaxially with each lens. In this case, the optical axis of each lens is on the same straight line, which can be understood as the optical axis of the optical system 10.

In some embodiments, the stop STO may also be arranged on the object side of the first lens L1. When it is described that the optical system 10 includes, in order from the object side toward the image side, elements such as the stop STO, the first lens L1, and the second lens L2, etc., the stop STO may be arranged on an object-side surface S1 of the first lens L1. In this case, a projection of the stop STO on the optical axis of the optical system 10 overlaps with a projection of the first lens L1 on the optical axis of the optical system 10. Alternatively, the stop STO may be arranged on the object side of the first lens L1, and the projection of the stop STO on the optical axis does not overlap with the projection of the first lens L1 on the optical axis. The above-mentioned optical axis is the optical axis of the optical system 10. When the first lens L1 has a positive refractive power, it will help to shorten the total optical length of the optical system 10.

The first lens L1 has the object-side surface S1 and an image-side surface S2. The second lens L2 has an object-side surface S3 and an image-side surface S4, and the object-side surface S3 is convex at a paraxial position (near the optical axis). The third lens L3 has an object-side surface S5 and an image-side surface S6. The fourth lens L4 has an object-side surface S7 and an image-side surface S8. The fifth lens L5 has an object-side surface S9 and an image-side surface S10. The sixth lens L6 has an object-side surface S11 and an image-side surface S12, and the image-side surface S12 is concave at a paraxial position (near the optical axis). In addition, the optical system 10 further includes an image surface S15. The image surface S15 is an imaging surface of the optical system 10, which may be a photosensitive surface of a photosensitive element including an effective pixel area.

In some embodiments, the object-side surface of at least one of the first lens L1, the second lens L2, the third lens L3, the fourth lens L4, the fifth lens L5, and the sixth lens L6 is aspherical. In some embodiments, the image-side surface of at least one of the first lens L1, the second lens L2, the third lens L3, the fourth lens L4, the fifth lens L5, and the sixth lens L6 is aspherical.

In some embodiments, the obj ect-side surface S11 of the sixth lens L6 is aspherical. Further, in some of the embodiments, the object-side surface S11 of the sixth lens L6 has at least one inflection point. In some embodiments, the image-side surface S12 of the sixth lens L6 is aspherical. Further, in some of the embodiments, the image-side surface S12 of the sixth lens L6 has at least one inflection point. The number of the inflection point may be one, two or more.

In some embodiments, both the object-side surfaces and the image-side surfaces of the first lens L1, the second lens L2, the third lens L3, the fourth lens L4, the fifth lens L5, and the sixth lens L6 are aspherical.

Formula of the aspherical shape is:

$$Z = \frac{cr^2}{1 + \sqrt{1 - (k + 1)c^2r^2}} + \sum_i Ai\, r^i$$

wherein, Z is a distance from a corresponding point on the aspherical surface to a plane tangent to a vertex of the surface, r is a distance from the corresponding point on the aspherical surface to the optical axis, c is a curvature of the aspherical surface vertex, k is a conic constant, and Ai is a coefficient corresponding to the higher order term of the i-th term in the Formula of the aspherical shape.

In some embodiments, the first lens L1, the second lens L2, the third lens L3, the fourth lens L4, the fifth lens L5, and the sixth lens L6 are made of plastic. In this case, plastic lens can reduce the weight of the optical system 10 and reduce production cost. Further, the optical system 10 can be designed to be thin and light by matching the parameter relationship of each lens. In some embodiments, the first lens L1, the second lens L2, the third lens L3, the fourth lens L4, the fifth lens L5, and the sixth lens L6 are made of glass. In this case, the optical system 10 can withstand higher temperature and has better optical properties. In other embodiments, it may be a case that only the first lens L1 is made of glass, and the other lenses are made of plastic. In this case, the first lens L1 closest to the object side can withstand the influence of the ambient temperature on the object side well, and the optical system 10 can also maintain a low production cost, since the other lenses are made of plastic. It should be noted that, according to actual requirements, each of the first lens L1, the second lens L2, the third lens L3, the fourth lens L4, and the fifth lens L5 may be made of any one of plastic and glass.

Further referring to FIG. 1, an infrared filter L7 is also provided on an image side of the sixth lens L6. The infrared filter L7 is an infrared cut-off filter. The infrared filter L7 can filter out infrared light, prevent the infrared light from passing through and reaching a photosensitive element, and prevent the infrared interference light from being received by the photosensitive element and affecting normal imaging, thereby improving the image quality of the optical system 10. In some embodiments, the infrared filter L7 may be assembled on the image side of the optical system 10 along with the photosensitive element when the lenses in the optical system 10 and the photosensitive element are assembled. The infrared filter L7 includes an object-side surface S11 and an image-side surface S12. In some embodiments, during the assembly of the optical system 10, the infrared filter L7 may be assembled together with each lens. In this case, the infrared filter L7 belongs to one optical element of the optical system 10. In other embodiments, the infrared filter L7 may also be mounted between the sixth lens L6 and the photosensitive element when the optical system 10 and the photosensitive element are assembled into a module.

In some embodiments, the optical system 10 further includes a prism arranged on the object side of the first lens L1. By matching the effect of the prism of changing the incident light path, the incident light is deflected and then enters the lens group, so that the optical system 10 will have periscope function. It should also be noted that, in some embodiments, the optical system 10 further includes a photosensitive element for receiving imaging light.

Further, in some embodiments, the optical system 10 satisfies the following condition:

$$(TTL\text{-}BFL)/f < 0.92$$

wherein, TTL is a distance on the optical axis from the object-side surface S1 of the first lens L1 toward the image surface S15 of the optical system 10, BFL is a shortest distance in a direction parallel to the optical axis from the image-side surface of the sixth lens L6 toward the imaging surface of the optical system 10, and f is an effective focal length of the optical system 10. In some embodiments, (TTL-BFL)/f may be 0.900, 0.902, 0.905, 0.910, 0.912, 0.914, or 0.916. In the above-mentioned optical system 10, when the first lens L1 has a positive refractive power, it will help to shorten the total optical length of the optical system 10, and when the above condition is satisfied, the spatial distribution of the lenses in the optical system 10 can become reasonable, which enables the optical system 10 to achieve an ultra-thin design while achieving high pixels. Further, in some embodiments, the optical system 10 satisfies the following condition: (TTL-BFL)/f≤0.918.

In some embodiments, the optical system 10 satisfies the following condition:

$$1 \text{ mm} \leq (SAG11+SAG21)*f/EPD \leq 2 \text{ mm}$$

wherein, SAG11 is a sagittal height of the object-side surface S1 of the first lens L1, i.e., SAG11 is a horizontal displacement distance in the direction parallel to the optical axis from an intersection of the object-side surface S1 of the first lens L1 on the optical axis toward the maximum effective semi-aperture position of the surface. SAG21 is a sagittal height of the object-side surface S3 of the second lens L2, i.e., SAG21 is a horizontal displacement distance in the direction parallel to the optical axis from an intersection of the object-side surface S3 of the second lens L2 on the optical axis toward the maximum effective semi-aperture position of the surface. EPD is a diameter of the entrance pupil of the optical system 10. In some embodiments, (SAG11+SAG21)*f/EPD may be 1.160mm, 1.200mm, 1.250mm, 1.300mm, 1.400mm, 1.500mm, 1.600mm, 1.700mm, 1.750mm, 1.800mm, or 1.850mm. When the above condition is satisfied, it is beneficial to increase the amount of light passing through the optical system 10, so as to highlight the camera subject, and it is also beneficial to the molding and manufacturing of the optical system 10 while ensuring high resolution. Further, in some embodiments, the optical system 10 satisfies the following condition: $1.15 \leq (SAG11+SAG21)*f7EPD \leq 1.86$.

In some embodiments, the optical system 10 satisfies the following condition:

$$SAG21/CT2 \leq 0.5$$

wherein, SAG21 is a sagittal height of the object-side surface S3 of the second lens L2, CT2 is a central thickness of the second lens L2, and the central thickness of the lens is the thickness of the lens on its own optical axis. In some embodiments, SAG21/CT2 may be 0.140, 0.145, 0.150, 0.160, 0.170, 0.180, 0.190, 0.250, 0.280, 0.300, 0.310, or 0.320. When the above condition is satisfied, it is beneficial to reduce the processing sensitivity of the second lens L2 and balance the field curvature of the optical system 10. Further, in some embodiments, the optical system 10 satisfies the following condition: $0.137 \leq SAG21/CT2 \leq 0.329$.

In some embodiments, the optical system 10 satisfies the following condition:

$$\sum CT/T214 \leq 1$$

wherein, $\Sigma CT$ is a sum of the central thicknesses of all lenses in the optical system 10, i.e., $\Sigma CT$ is a sum of the central thicknesses of the first lens L1, the second lens L2, the third lens L3, the fourth lens L4, the fifth lens L5, and the sixth lens L6. T214 is a distance on the optical axis from the object-side surface S1 of the first lens L1 toward the image-side surface S12 of the sixth lens L6. In some embodiments, $\Sigma CT/T214$ may be 0.620, 0.630, 0.650, 0.670, 0.675, 0.678, or 0.680. When the above condition is satisfied, the thickness of each lens in the optical system 10 can be reasonably arranged to make the structure of the optical system 10 more compact, and to improve the assembly process of the lens group. Further, in some embodiments, the optical system 10 satisfies the following condition: $0.617 \leq \Sigma CT/T214 \leq 0.682$.

In some embodiments, the optical system 10 satisfies the following condition:

$$1 \leq ET2/CT2 \leq 2$$

wherein, ET2 is an edge thickness of the second lens L2, i.e., ET2 is a thickness of the second lens L2 at the maximum effective semi-aperture, and CT2 is a central thickness of the second lens L2. In some embodiments, ET2/CT2 may be 1.320, 1.340, 1.350, 1.380, 1.400, 1.420, 1.450, 1.470 or 1.485. When the above condition is satisfied, it is beneficial to reduce the stray light in the optical system 10 and improve the imaging quality. Further, in some embodiments, the optical system 10 satisfies the following condition: $1.317 \leq ET2/CT2 \leq 1.490$.

In some embodiments, the optical system 10 satisfies the following condition:

$$(CT3+CT4+CT5)/f \leq 0.5$$

wherein, CT3 is a central thickness of the third lens L3, CT4 is a central thickness of the fourth lens L4, and CT5 is a central thickness of the fifth lens L5. In some embodiments, (CT3+CT4+CT5)/f may be 0.205, 0.210, 0.220, 0.230, 0.235, or 0.240. When the above condition is satisfied, the thickness of the lens can be reasonably distributed under the premise of satisfying the processing requirements, so that the imaging quality of the optical system 10 can be improved, and the optical system 10 can also achieve an ultra-thin design. Further, in some embodiments, the optical system 10 satisfies the following condition: $0.201 \leq (CT3+CT4+CT5)/f \leq 0.240$.

In some embodiments, the optical system 10 satisfies the following condition:

$$1.0 \leq f12/f \leq 1.5$$

wherein, f12 is a combined focal length of the first lens L1 and the second lens L2. In some embodiments, f12/f may be 1.070, 1.090, 1.100, 1.120, 1.130, or 1.150, or 1.160. When the above condition is satisfied, the effective focal length of the optical system 10 can be reasonably matched with the combined focal length of the first lens L1 and the second lens L2, thereby facilitating correction of the spherical aberration of off-axis rays at different aperture positions. Further, in some embodiments, the optical system 10 satisfies the following condition: $1.067 \leq f12/f \leq 1.164$.

In some embodiments, the optical system 10 satisfies the following condition:

$$-3 \leq f6/f \leq 0$$

wherein, f6 is a focal length of the sixth lens L6. In some embodiments, f6/f may be -2.500, - 2.400, -2.200, -2.000, -1.500, -1.300, -1.200, -1.100, -1.000, -0.980. When the above condition is satisfied, it is beneficial to balance the astigmatism and field curvature of the optical system 10, thereby improving the imaging quality. Further, in some embodiments, the optical system 10 satisfies the following condition: $-2.514 \leq f6/f \leq -0.969$.

In some embodiments, the optical system 10 satisfies the following condition:

$$0.5 \leq R12/f \leq 1.5$$

wherein, R12 is a radius of curvature of the image-side surface of the first lens L1 on the optical axis. In some embodiments, R12/f may be 0.950, 0.970, 1.000, 1.100, 1.200, 1.250, 1.300, 1.330, 1.350, or 1.360. When the above condition is satisfied, it is beneficial to compress the length of the optical system 10 while ensuring high resolution. Further, in some embodiments, the optical system 10 satisfies the following condition: $0.941 \leq R12/f \leq 1.364$.

In some embodiments, the optical system 10 satisfies the following condition:

$$4.95 \leq f \leq 5.89$$

f is an effective focal length of the optical system 10 and has a unit of mm.

In some embodiments, the optical system 10 satisfies the following condition:

$$1.79 \leq FNO \leq 2.2$$

FNO is a F-number of the optical system 10.

In some embodiments, the optical system 10 satisfies the following condition:

$$75.66 \leq FOV \leq 85.40$$

FOV is a maximum field of view (diagonal field of view) of the optical system 10 and has a unit of degree (deg.).

In some embodiments, the optical system 10 may be regarded as a lens group or lens system composed of these lenses. In this case, when the optical system 10 and the photosensitive element are assembled together to form a camera module, the camera module may satisfy the following condition:

$$1.0 \leq TTL/IMGH \leq 1.4$$

IMGH is half of the diagonal length of the effective pixel area on the photosensitive element. Specifically, TTL/IMGH may be 1.240, 1.250, 1.300, 1.320, 1.350, 1.370, 1.380, or 1.390. When the above condition is satisfied, it is beneficial to shorten the length of the optical system 10 and to realize the miniaturization design of the entire camera module. Further, in some embodiments, the camera module satisfies the following condition: 1.237≤TTL/IMGH≤1.392.

In some embodiments, the optical system 10 satisfies the following condition:

$$ImgH=4.64$$

ImgH is half of the diagonal length of the effective pixel area on the photosensitive element and has a unit of mm.

In some embodiments, the optical system 10 satisfies the following condition:

$$5.74 \leq TTL \leq 6.46$$

TTL is a distance on the optical axis from the object-side surface S1 of the first lens L1 toward the imaging surface of the optical system 10, and has a unit of mm.

The optical system 10 of the present disclosure is described by using more specific and detailed embodiments below.

First Embodiment

Referring to FIGS. 1 and 2, in the first embodiment, the optical system 10 includes, in order from an object side toward an image side, a stop STO, a first lens L1 with a positive refractive power, a second lens L2 with a negative refractive power, a third lens L3 with a positive refractive power, a fourth lens L4 with a positive refractive power, a fifth lens L5 with a positive refractive power, and a sixth lens L6 with a negative refractive power. FIG. 2 includes diagrams of spherical aberration (mm), astigmatism (mm), and distortion (%) of the optical system 10 in the first embodiment. The astigmatism and distortion diagrams in this embodiment and the following embodiments are all graphs at a wavelength of 555 nm.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is concave at the optical axis and concave at the circumference.

The object-side surface S11 of the sixth lens L6 is convex at the optical axis and convex at the circumference; and the image-side surface S12 thereof is concave at the optical axis and convex at the circumference.

It should be noted that, when it is described in the present disclosure that a side surface of the lens is convex at the optical axis (the central area of the side surface), it can be understood that the area near the optical axis of the side surface of the lens is convex, so the side surface can also be considered to be convex at a paraxial position thereof. When it is described that a side surface of the lens is concave at the circumference, it can be understood that the area near the maximum effective radius of the side surface is concave. For example, when the side surface is convex at the optical axis and also convex at the circumference, the shape of the side surface in a direction from the center (optical axis) to the edge may be purely convex, i.e., the side surface has no inflection point; or may be a shape in which the convex shape at the center transitions to a concave shape, and then becomes a convex shape near the maximum effective radius. This is only an example to illustrate the relationship between the optical axis and the circumference. The various shapes and structures (concave-convex relationship) on the side surface are not fully reflected, but other situations can be derived from the above examples.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 1, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In some embodiments, the optical system 10 satisfies the following conditions:

$$(TTL-BFL)/f=0.917$$

wherein, TTL is a distance on the optical axis from the object-side surface of the first lens L1 toward the imaging surface of the optical system 10, BFL is the shortest distance in the direction parallel to the optical axis from the image-side surface of the sixth lens L6 toward the imaging surface of the optical system 10, and f is an effective focal length of the optical system 10. In the above-mentioned optical system 10, when the first lens L1 has a positive refractive power, it will help to shorten the total optical length of the optical system 10, and when the above condition is satisfied, the spatial distribution of the lenses in the optical system 10 can become reasonable, which enables the optical system 10 to achieve an ultra-thin design while achieving high pixels.

$$(SAG11+SAG21)*f/EPD=1.341 \text{ mm}$$

wherein, SAG11 is a sagittal height of the object-side surface S1 of the first lens L1, i.e., SAG11 is a horizontal displacement distance in the direction parallel to the optical axis from an intersection of the object-side surface S1 of the first lens L1 on the optical axis toward the maximum effective semi-aperture position of the surface. SAG21 is a sagittal height of the object-side surface S3 of the second lens L2, i.e., SAG21 is a horizontal displacement distance in the direction parallel to the optical axis from an intersection of the object-side surface S3 of the second lens L2 on the optical axis toward the maximum effective semi-aperture position of the surface. EPD is a diameter of the entrance pupil of the optical system 10. When the above condition is satisfied, it is beneficial to increase the amount of light passing through the optical system 10, so as to highlight the camera subject, and it is also beneficial to the molding and manufacturing of the optical system 10 while ensuring high resolution.

$$SAG21/CT2=0.182$$

wherein, SAG21 is a sagittal height of the object-side surface S3 of the second lens L2, CT2 is a central thickness of the second lens L2, and the central thickness of the lens is the thickness of the lens on its own optical axis. When the above condition is satisfied, it is beneficial to reduce the processing sensitivity of the second lens L2 and balance the field curvature of the optical system 10.

$$\sum CT/T214=0.617$$

wherein, $\sum CT$ is a sum of the central thicknesses of all lenses in the optical system 10, and T214 is a distance on the optical axis from the object-side surface S1 of the first lens L1 toward the image-side surface S12 of the sixth lens L6. When the above condition is satisfied, the thickness of each lens in the optical system 10 can be reasonably arranged to make the structure of the optical system 10 more compact, and to improve the assembly process of the lens group.

$$ET2/CT2=1.347$$

wherein, ET2 is an edge thickness of the second lens L2, i.e., ET2 is a thickness of the second lens L2 at the maximum effective semi-aperture, and CT2 is a central thickness of the second lens L2. When the above condition is satisfied, it is beneficial to reduce the stray light in the optical system 10 and improve the imaging quality.

$$(CT3+CT4+CT5)/f=0.219$$

wherein, CT3 is a central thickness of the third lens L3, CT4 is a central thickness of the fourth lens L4, and CT5 is a central thickness of the fifth lens L5. When the above condition is satisfied, the thickness of the lens can be reasonably distributed under the premise of satisfying the processing requirements, so that the imaging quality of the optical system 10 can be improved, and the optical system 10 can also achieve an ultra-thin design.

$$f12/f=1.164$$

wherein, f12 is a combined focal length of the first lens L1 and the second lens L2. When the above condition is satisfied, the effective focal length of the optical system 10 can be reasonably matched with the combined focal length of the first lens L1 and the second lens L2, thereby facilitating correction of the spherical aberration of off-axis rays at different aperture positions.

$$f6/f=-1.109$$

wherein, f6 is a focal length of the sixth lens L6. When the above condition is satisfied, it is beneficial to balance the astigmatism and field curvature of the optical system 10, thereby improving the imaging quality.

$$R12/f=1.281$$

wherein, R12 is a radius of curvature of the image-side surface of the first lens L1 on the optical axis. When the above condition is satisfied, it is beneficial to compress the length of the optical system 10 while ensuring high resolution.

The optical system 10 may be regarded as a lens group or lens system composed of these lenses. When the optical system 10 and the photosensitive element are assembled together to form a camera module, the camera module satisfies the following condition:

$$TTL/IMGH=1.293$$

IMGH is half of the diagonal length of the effective pixel area on the photosensitive element. When the above condition is satisfied, it is beneficial to shorten the length of the optical system 10 and to realize the miniaturization design of the entire camera module.

In addition, the parameters of each lens of the optical system 10 are given in Tables 1 and 2. K in Table 2 is a conic constant, and Ai is a coefficient corresponding to the higher order term of the i-th term in the Formula of the aspherical shape. The elements from the object surface to the image surface S15 are arranged in the order of the elements from top to bottom in Table 1. The surface numbers 2 and 3 represent the object-side surface S1 and the image-side surface S2 of the first lens L1, respectively. That is, in the same lens, the surface with the smaller surface number is the object-side surface, and the surface with the larger surface number is the image-side surface. The Y radius in Table 1 is the radius of curvature of the object-side surface or the image-side surface with the corresponding surface number at the paraxial position (or understood as on the optical axis). The first value of the lens in the "thickness" parameter column is the thickness of the lens on the optical axis, and the second value is the distance on the optical axis from the image-side surface of the lens toward the object-side surface of the subsequent lens. The "thickness" parameter with the surface number 1 is the distance on the optical axis from the stop STO toward the object-side surface of the first lens L1. The value of the stop STO in the "thickness" parameter column is the distance on the optical axis distance from the stop STO toward the vertex (the vertex refers to the intersection of the lens and the optical axis) of the object-side surface of the subsequent lens (the first lens L1 in this embodiment). By default, the direction from the object-side surface of the first lens L1 toward the image-side surface of the last lens is the positive direction of the optical axis. When the value is negative, it indicates that the stop STO is arranged on the right side of the vertex of the object-side surface of the lens (in other words, it is located at the image side of the vertex). When the "thickness" parameter of the stop STO is positive, the stop STO is on the left side of the vertex of the object-side surface of the lens (or understood to be located at the object side of the vertex). The optical axis of each lens in the embodiments of the present disclosure is on the same straight line, which acts as the optical axis of the optical system 10. The "thickness" parameter value with the surface number 13 is the distance on the optical axis from the image-side surface S12 of the sixth lens L6 toward the object-side surface S13 of the infrared filter L7. The "thickness" parameter value corresponding to the surface number 15 of the infrared filter L7 is the distance on the optical axis from the image-side surface S14 of the infrared filter L7 toward the image surface S15 of the optical system 10. The image surface S15 is the imaging surface of the optical system 10, and may also be understood as the photosensitive surface on the photosensitive element.

In the first embodiment, in the optical system 10, the effective focal length f=5.43mm, the F-number FNO=1.93, the maximum field of view (diagonal field of view) FOV=80.2°, the half of the diagonal length of the effective pixel area on the image surface S15 ImgH=4.64mm.

In addition, in the following embodiments (the first embodiment, the second embodiment, the third embodiment, the fourth embodiment, the fifth embodiment, the sixth embodiment, and the seventh embodiment), the refractive index, Abbe number, and focal length of each lens are all values at a wavelength of 587 nm. In addition, the calculation of the expressions and the lens surface shape in each embodiment are based on the lens parameters (such as Table 1, Table 2, Table 3, Table 4, etc.).

Table 1

| First Embodiment | | | | | | | | |
|---|---|---|---|---|---|---|---|---|
| f=5.43mm, FNO=1.93, FOV=80.2° | | | | | | | | |
| Surface Number | Surface Name | Surface Type | Y radius (mm) | Thickness (mm) | Material | Refractive index | Abbe number | Focal length (mm) |
| 0 | Object surface | Spherical | Infinite | Infinite | | | | |
| 1 | Stop STO | Spherical | Infinite | -0.632 | | | | |
| 2 | First lens L1 | Aspherical | 1.833 | 0.836 | Plastic | 1.54 | 56.1 | 4.31 |
| 3 | | Aspherical | 6.956 | 0.145 | | | | |
| 4 | Second lens L2 | Aspherical | 39.008 | 0.336 | Plastic | 1.67 | 19.2 | -10.18 |
| 5 | | Aspherical | 5.841 | 0.308 | | | | |
| 6 | Third lens L3 | Aspherical | 8.381 | 0.324 | Plastic | 1.54 | 56.1 | 206.15 |
| 7 | | Aspherical | 8.932 | 0.231 | | | | |
| 8 | Fourth lens L4 | Aspherical | -16.104 | 0.338 | Plastic | 1.54 | 23.5 | 48.75 |
| 9 | | Aspherical | -10.735 | 0.652 | | | | |
| 10 | Fifth lens L5 | Aspherical | 5.711 | 0.530 | Plastic | 1.54 | 56.1 | 14.29 |
| 11 | | Aspherical | 20.610 | 0.501 | | | | |
| 12 | Sixth lens L6 | Aspherical | 4.629 | 0.608 | Plastic | 1.53 | 55.8 | -6.02 |
| 13 | | Aspherical | 1.817 | 0.461 | | | | |
| 14 | Infrared filter L7 | Spherical | Infinite | 0.210 | Glass | 1.52 | 64.2 | |
| 15 | | Spherical | Infinite | 0.521 | | | | |
| 16 | Image surface | Spherical | Infinite | 0.000 | | | | |

Table 2

| First Embodiment | | | | | | |
|---|---|---|---|---|---|---|
| Aspheric coefficient | | | | | | |
| Surface Number | 2 | 3 | 4 | 5 | 6 | 7 |
| K | -8.271E+00 | -1.604E-01 | -6.536E+01 | 2.556E+00 | -9.900E+01 | -9.228E+01 |
| A4 | 1.672E-01 | -3.305E-02 | -4.870E-02 | -3.326E-02 | -6.784E-02 | -6.731E-02 |
| A6 | -1.460E-01 | 1.971E-02 | 6.468E-02 | 9.068E-02 | 1.144E-02 | 9.059E-03 |
| A8 | 1.700E-01 | -2.877E-03 | -2.473E-02 | -1.053E-01 | 7.465E-02 | 6.261E-02 |

(continued)

| First Embodiment | | | | | | |
|---|---|---|---|---|---|---|
| Aspheric coefficient | | | | | | |
| Surface Number | 2 | 3 | 4 | 5 | 6 | 7 |
| A10 | -1.724E-01 | -1.772E-02 | -1.136E-02 | 1.699E-01 | -4.542E-01 | -2.567E-01 |
| A12 | 1.399E-01 | 2.903E-02 | 2.293E-02 | -1.965E-01 | 1.081E+00 | 4.456E-01 |
| A14 | -8.257E-02 | -2.501E-02 | -1.235E-02 | 1.042E-01 | -1.484E+00 | -4.650E-01 |
| A16 | 3.225E-02 | 1.186E-02 | 1.245E-03 | 2.693E-02 | 1.194E+00 | 2.900E-01 |
| A18 | -7.290E-03 | -2.859E-03 | 1.477E-03 | -5.602E-02 | -5.243E-01 | -9.926E-02 |
| A20 | 6.870E-04 | 2.592E-04 | -4.253E-04 | 1.872E-02 | 9.769E-02 | 1.448E-02 |
| Surface Number | 8 | 9 | 10 | 11 | 12 | 13 |
| K | 9.048E+01 | -1.658E+01 | 9.212E-01 | -3.828E+01 | -2.148E+01 | -7.093E+00 |
| A4 | -9.300E-02 | -8.905E-02 | -1.919E-02 | -1.696E-02 | -1.698E-01 | -8.295E-02 |
| A6 | -8.120E-04 | 1.567E-02 | -7.506E-03 | 2.589E-02 | 8.353E-02 | 3.370E-02 |
| A8 | 1.140E-01 | 6.866E-03 | -9.440E-03 | -3.249E-02 | -3.009E-02 | -1.062E-02 |
| A10 | -2.620E-01 | 8.001E-03 | 8.522E-03 | 1.781E-02 | 7.533E-03 | 2.264E-03 |
| A12 | 3.530E-01 | -2.830E-02 | -4.110E-03 | -6.035E-03 | -1.220E-03 | -3.103E-04 |
| A14 | -2.985E-01 | 3.170E-02 | 1.195E-03 | 1.313E-03 | 1.249E-04 | 2.633E-05 |
| A16 | 1.550E-01 | -1.640E-02 | -1.931E-04 | -1.740E-04 | -7.836E-06 | -1.318E-06 |
| A18 | -4.475E-02 | 3.991E-03 | 1.590E-05 | 1.263E-05 | 2.754E-07 | 3.540E-08 |
| A20 | 5.428E-03 | -3.720E-04 | -5.216E-07 | -3.833E-07 | -4.166E-09 | -3.919E-10 |

Second Embodiment

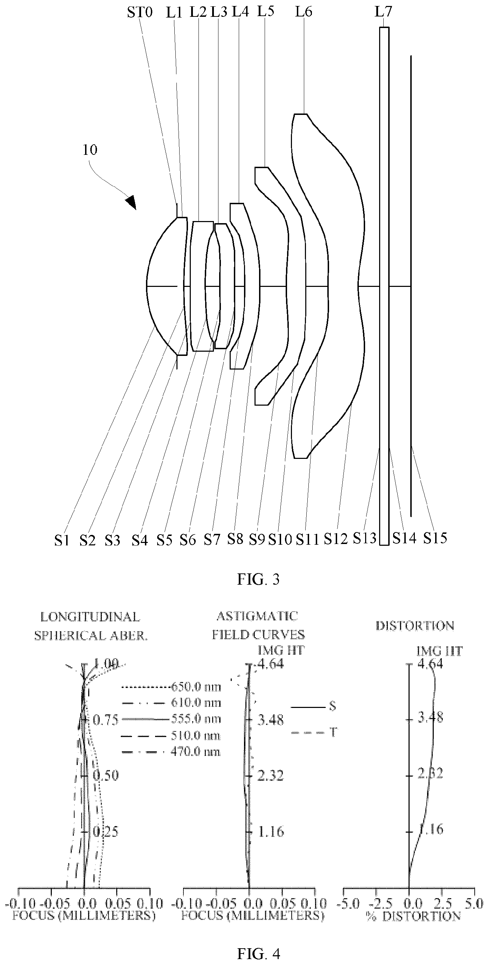

Referring to FIGS. 3 and 4, in the second embodiment, the optical system 10 includes, in order from an object side toward an image side: a stop STO, a first lens L1 with a positive refractive power, a second lens L2 with a negative refractive power, a third lens L3 with a negative refractive power, a fourth lens L4 with a positive refractive power, a fifth lens L5 with a positive refractive power, and a sixth lens L6 with a negative refractive power. FIG. 4 includes diagrams of spherical aberration (mm), astigmatism (mm), and distortion (%) of the optical system 10 in the second embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is concave at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 3, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the second embodiment, in the optical system 10, the effective focal length f=5.42mm, the F-number FNO=1.89, the maximum field of view (diagonal field of view) FOV=80.33°, the half of the diagonal length of the effective pixel area on the image surface S15 ImgH=4.64mm.

In addition, the lens parameters of the optical system 10 are given in Tables 3 and 4. The definition of each parameter can be obtained in the first embodiment, and will not be repeated here.

Table 3

| Second Embodiment | | | | | | | | |
|---|---|---|---|---|---|---|---|---|
| f=5.42mm, FNO=1.89, FOV=80.33° | | | | | | | | |
| Surface Number | Surface Name | Surface Type | Y radius (mm) | Thickness (mm) | Material | Refractive index | Abbe number | Focal length (mm) |
| 0 | Object surface | Spherical | Infinite | Infinite | | | | |
| 1 | Stop STO | Spherical | Infinite | -0.677 | | | | |
| 2 | First lens L1 | Aspherical | 1.797 | 0.836 | Plastic | 1.54 | 56.1 | 4.31 |
| 3 | | Aspherical | 6.358 | 0.144 | | | | |
| 4 | Second lens L2 | Aspherical | 64.532 | 0.336 | Plastic | 1.67 | 19.2 | -12.66 |
| 5 | | Aspherical | 7.550 | 0.327 | | | | |
| 6 | Third lens L3 | Aspherical | 14.396 | 0.323 | Plastic | 1.54 | 56.1 | -189.40 |
| 7 | | Aspherical | 12.536 | 0.235 | | | | |
| 8 | Fourth lens L4 | Aspherical | -13.470 | 0.337 | Plastic | 1.54 | 23.5 | 57.80 |
| 9 | | Aspherical | -9.990 | 0.592 | | | | |
| 10 | Fifth lens L5 | Aspherical | 5.863 | 0.430 | Plastic | 1.54 | 56.1 | 13.22 |
| 11 | | Aspherical | 30.419 | 0.501 | | | | |
| 12 | Sixth lens L6 | Aspherical | 7.636 | 0.673 | Plastic | 1.53 | 55.8 | -5.48 |
| 13 | | Aspherical | 2.060 | 0.482 | | | | |
| 14 | Infrared filter L7 | Spherical | Infinite | 0.210 | Glass | 1.52 | 64.2 | |
| 15 | | Spherical | Infinite | 0.493 | | | | |
| 16 | Image surface | Spherical | Infinite | 0.000 | | | | |

Table 4

| Second Embodiment | | | | | | |
|---|---|---|---|---|---|---|
| Aspheric coefficient | | | | | | |
| Surface Number | 2 | 3 | 4 | 5 | 6 | 7 |
| K | -7.939E+00 | 2.628E-01 | -9.900E+01 | 9.774E+00 | -8.380E+01 | -9.750E+01 |
| A4 | 1.721E-01 | -2.412E-02 | -3.402E-02 | -1.506E-02 | -8.190E-02 | -7.211E-02 |

(continued)

| Second Embodiment | | | | | | |
|---|---|---|---|---|---|---|
| Aspheric coefficient | | | | | | |
| Surface Number | 2 | 3 | 4 | 5 | 6 | 7 |
| A6 | -1.587E-01 | 1.842E-04 | 4.299E-02 | 3.893E-02 | 4.801E-02 | -1.285E-02 |
| A8 | 2.222E-01 | 2.632E-02 | -3.881E-02 | 7.786E-02 | -9.309E-02 | 2.052E-01 |
| A10 | -2.906E-01 | -5.394E-02 | 8.622E-02 | -4.145E-01 | 3.186E-02 | -6.997E-01 |
| A12 | 2.995E-01 | 5.972E-02 | -1.437E-01 | 1.030E+00 | 1.853E-01 | 1.195E+00 |
| A14 | -2.125E-01 | -3.868E-02 | 1.426E-01 | -1.460E+00 | -4.286E-01 | -1.213E+00 |
| A16 | 9.476E-02 | 1.301E-02 | -8.306E-02 | 1.204E+00 | 4.287E-01 | 7.319E-01 |
| A18 | -2.358E-02 | -1.706E-03 | 2.646E-02 | -5.377E-01 | -2.130E-01 | -2.420E-01 |
| A20 | 2.446E-03 | -2.274E-05 | -3.507E-03 | 1.017E-01 | 4.280E-02 | 3.375E-02 |
| Surface Number | 8 | 9 | 10 | 11 | 12 | 13 |
| K | 9.816E+01 | -8.950E-01 | -1.210E+00 | 4.689E+01 | -8.231E+00 | -8.122E+00 |
| A4 | -8.147E-02 | -8.233E-02 | -2.945E-02 | -3.812E-02 | -1.838E-01 | -8.041E-02 |
| A6 | 2.856E-02 | 2.694E-02 | -1.846E-02 | 2.209E-02 | 6.802E-02 | 2.913E-02 |
| A8 | -3.779E-02 | -2.594E-02 | 1.800E-02 | -2.462E-02 | -1.539E-02 | -7.980E-03 |
| A10 | 1.178E-01 | 5.569E-02 | -1.781E-02 | 1.646E-02 | 2.670E-03 | 1.511E-03 |
| A12 | -2.345E-01 | -7.462E-02 | 1.007E-02 | -7.810E-03 | -3.566E-04 | -1.835E-04 |
| A14 | 2.532E-01 | 5.909E-02 | -3.727E-03 | 2.363E-03 | 3.384E-05 | 1.275E-05 |
| A16 | -1.521E-01 | -2.585E-02 | 8.714E-04 | -4.137E-04 | -2.080E-06 | -3.951E-07 |
| A18 | 4.895E-02 | 5.758E-03 | -1.094E-04 | 3.802E-05 | 7.320E-08 | -1.019E-09 |
| A20 | -6.741E-03 | -5.115E-04 | 5.474E-06 | -1.419E-06 | -1.114E-09 | 2.394E-10 |

It can be derived from the above data that:

| Second Embodiment | | | |
|---|---|---|---|
| (TTL-BFL)/f | 0.899 | ET2/CT2 | 1.339 |
| (SAG11+SAG21)*f/EPD | 1.417 | (CT3+CT4+CT5)/f | 0.201 |
| SAG21/CT2 | 0.208 | f12/f | 1.067 |
| TTL/IMGH | 1.275 | f6/f | -1.012 |
| ΣCT/T214 | 0.619 | R12/f | 1.173 |

Third Embodiment

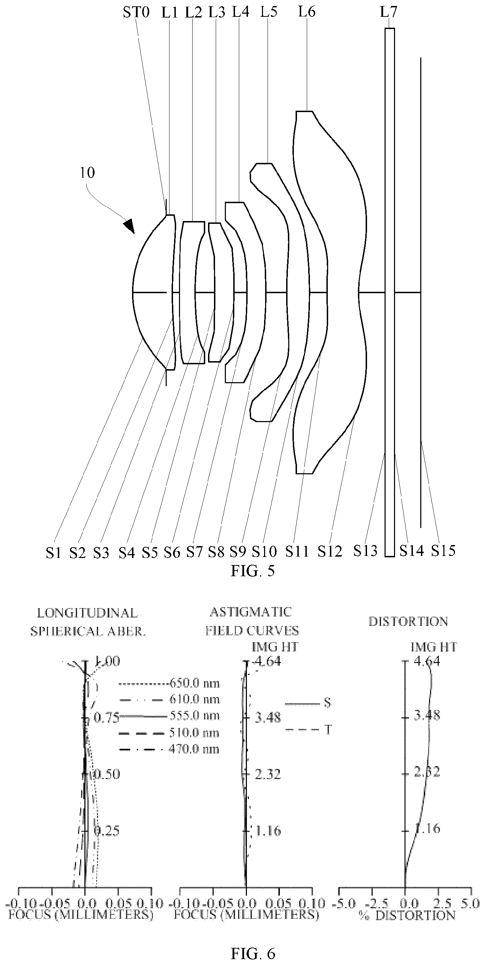

Referring to FIGS. 5 and 6, in the third embodiment, the optical system 10 includes, in order from an object side toward an image side: a stop STO, a first lens L1 with a positive refractive power, a second lens L2 with a negative refractive power, a third lens L3 with a positive refractive power, a fourth lens L4 with a negative refractive power, a fifth lens L5 with a positive refractive power, and a sixth lens L6 with a negative refractive power. FIG. 6 includes diagrams of spherical aberration (mm), astigmatism (mm), and distortion (%) of the optical system 10 in the third embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is convex at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is convex at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 5, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the third embodiment, in the optical system 10, the effective focal length f=5.67mm, the F-number FNO=1.83, the maximum field of view (diagonal field of view) FOV=77.79°, the half of the diagonal length of the effective pixel area on the image surface S15 ImgH=4.64mm.

In addition, the lens parameters of the optical system 10 are given in Tables 5 and 6. The definition of each parameter can be obtained in the first embodiment, and will not be repeated here.

Table 5

| Third Embodiment | | | | | | | | |
|---|---|---|---|---|---|---|---|---|
| f=5.67mm, FNO=1.83, FOV=77.79° | | | | | | | | |
| Surface Number | Surface Name | Surface Type | Y radius (mm) | Thickne ss (mm) | Material | Refractive index | Abbe number | Focal length (mm) |
| 0 | Object surface | Spherical | Infinite | Infinite | | | | |
| 1 | Stop STO | Spherical | Infinite | -0.735 | | | | |
| 2 | First lens L1 | Aspherical | 1.943 | 0.872 | Plastic | 1.54 | 56.1 | 4.51 |
| 3 | | Aspherical | 7.734 | 0.155 | | | | |
| 4 | Second lens L2 | Aspherical | 17.760 | 0.347 | Plastic | 1.67 | 19.2 | -12.65 |
| 5 | | Aspherical | 5.734 | 0.427 | | | | |
| 6 | Third lens L3 | Aspherical | 45.898 | 0.417 | Plastic | 1.54 | 56.1 | 53.87 |
| 7 | | Aspherical | -81.565 | 0.289 | | | | |
| 8 | Fourth lens L4 | Aspherical | -10.153 | 0.419 | Plastic | 1.54 | 23.5 | -34.16 |
| 9 | | Aspherical | -19.142 | 0.455 | | | | |
| 10 | Fifth lens L5 | Aspherical | 8.004 | 0.500 | Plastic | 1.54 | 56.1 | 8.76 |
| 11 | | Aspherical | -11.629 | 0.382 | | | | |
| 12 | Sixth lens L6 | Aspherical | 4.854 | 0.691 | Plastic | 1.53 | 55.8 | -5.50 |
| 13 | | Aspherical | 1.744 | 0.582 | | | | |

(continued)

| Third Embodiment | | | | | | | | |
|---|---|---|---|---|---|---|---|---|
| f=5.67mm, FNO=1.83, FOV=77.79° | | | | | | | | |
| Surface Number | Surface Name | Surface Type | Y radius (mm) | Thickne ss (mm) | Material | Refractive index | Abbe number | Focal length (mm) |
| 14 | Infrared filter L7 | Spherical | Infinite | 0.210 | Glass | 1.52 | 64.2 | |
| 15 | | Spherical | Infinite | 0.579 | | | | |
| 16 | Image surface | Spherical | Infinite | 0.000 | | | | |

Table 6

| Third Embodiment | | | | | | |
|---|---|---|---|---|---|---|
| Aspheric coefficient | | | | | | |
| Surface Number | 2 | 3 | 4 | 5 | 6 | 7 |
| K | -9.451E+00 | 6.212E+00 | -9.900E+01 | -6.099E+00 | 9.900E+01 | -9.900E+01 |
| A4 | 1.600E-01 | -2.242E-02 | -3.033E-02 | -8.982E-03 | -4.335E-02 | -3.772E-02 |
| A6 | -1.454E-01 | 2.639E-03 | 2.256E-02 | 4.598E-02 | -1.993E-02 | -5.921E-02 |
| A8 | 1.679E-01 | 1.358E-02 | 3.179E-03 | -8.281E-02 | 7.752E-02 | 1.925E-01 |
| A10 | -1.660E-01 | -2.731E-02 | -9.458E-03 | 1.892E-01 | -2.268E-01 | -4.047E-01 |
| A12 | 1.274E-01 | 2.875E-02 | 5.107E-03 | -2.598E-01 | 3.827E-01 | 5.087E-01 |
| A14 | -6.893E-02 | -1.853E-02 | -1.187E-04 | 2.119E-01 | -4.027E-01 | -4.008E-01 |
| A16 | 2.413E-02 | 6.994E-03 | -1.024E-03 | -9.572E-02 | 2.569E-01 | 1.931E-01 |
| A18 | -4.817E-03 | -1.417E-03 | 4.707E-04 | 2.010E-02 | -9.051E-02 | -5.176E-02 |
| A20 | 4.038E-04 | 1.168E-04 | -6.257E-05 | -7.854E-04 | 1.346E-02 | 5.865E-03 |
| Surface Number | 8 | 9 | 10 | 11 | 12 | 13 |
| K | -3.476E+01 | 6.959E+01 | -5.498E+00 | 1.609E+01 | -4.047E+00 | -6.876E+00 |
| A4 | -6.689E-02 | -6.569E-02 | 1.140E-02 | -1.704E-02 | -2.188E-01 | -8.414E-02 |
| A6 | -1.700E-02 | -6.611E-03 | -6.331E-02 | -6.842E-03 | 7.995E-02 | 3.183E-02 |
| A8 | 3.036E-02 | 1.349E-02 | 6.203E-02 | 1.508E-02 | -1.596E-02 | -8.710E-03 |
| A10 | 6.739E-03 | 5.361E-03 | -4.227E-02 | -1.068E-02 | 2.162E-03 | 1.687E-03 |
| A12 | -7.398E-02 | -1.907E-02 | 1.785E-02 | 3.640E-03 | -2.179E-04 | -2.278E-04 |
| A14 | 8.874E-02 | 1.504E-02 | -4.780E-03 | -6.677E-04 | 1.669E-05 | 2.050E-05 |
| A16 | -5.016E-02 | -5.516E-03 | 7.876E-04 | 6.738E-05 | -9.126E-07 | -1.159E-06 |
| A18 | 1.461E-02 | 9.749E-04 | -7.156E-05 | -3.478E-06 | 3.093E-08 | 3.735E-08 |
| A20 | -1.817E-03 | -6.688E-05 | 2.708E-06 | 6.960E-08 | -4.767E-10 | -5.267E-10 |

It can be derived from the above data that:

| Third Embodiment | | | |
|---|---|---|---|
| (TTL-BFL)/f | 0.906 | ET2/CT2 | 1.320 |

(continued)

| Third Embodiment | | | |
|---|---|---|---|
| (SAG11+SAG21)*f/EPD | 1.435 | (CT3+CT4+CT5)/f | 0.235 |
| SAG21/CT2 | 0.135 | f12/f | 1.081 |
| TTL/IMGH | 1.364 | f6/f | -0.969 |
| ΣCT/T214 | 0.655 | R12/f | 1.364 |

Fourth Embodiment

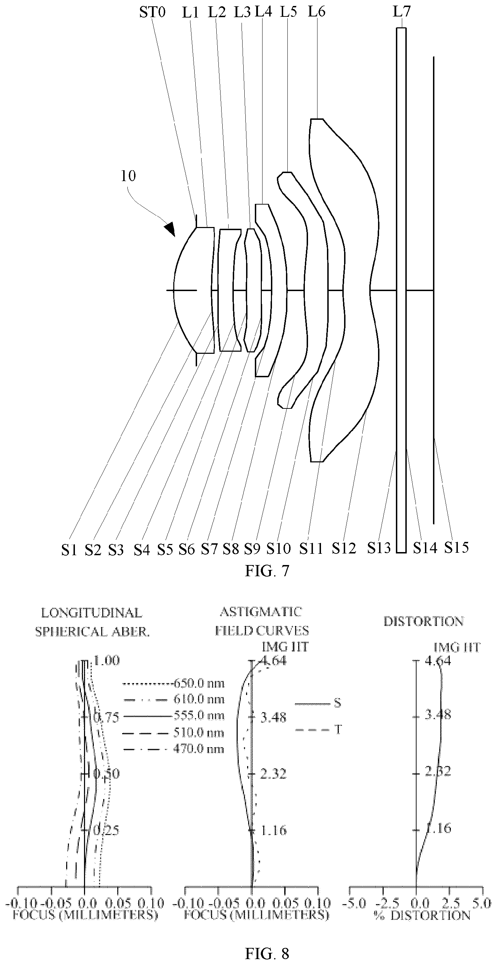

Referring to FIGS. 7 and 8, in the fourth embodiment, the optical system 10 includes, in order from an object side toward an image side: a stop STO, a first lens L1 with a positive refractive power, a second lens L2 with a negative refractive power, a third lens L3 with a negative refractive power, a fourth lens L4 with a negative refractive power, a fifth lens L5 with a positive refractive power, and a sixth lens L6 with a negative refractive power. FIG. 8 includes diagrams of spherical aberration (mm), astigmatism (mm), and distortion (%) of the optical system 10 in the fourth embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is concave at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 7, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the fourth embodiment, in the optical system 10, the effective focal length f=4.95mm, the F-number FNO=2.04, the maximum field of view (diagonal field of view) FOV=85.4°, the half of the diagonal length of the effective pixel area on the image surface S15 ImgH=4.64mm.

In addition, the lens parameters of the optical system 10 are given in Tables 7 and 8. The definition of each parameter can be obtained in the first embodiment, and will not be repeated here.

Table 7

| | | | | Fourth Embodiment | | | | |
|---|---|---|---|---|---|---|---|---|
| | | | | f=4.95mm, FNO=2.04, FOV=85.4° | | | | |
| Surface Number | Surface Name | Surface Type | Y radius (mm) | Thickne ss (mm) | Material | Refractive index | Abbe number | Focal length (mm) |
| 0 | Object surface | Spherical | Infinite | Infinite | | | | |
| 1 | Stop STO | Spherical | Infinite | -0.501 | | | | |
| 2 | First lens L1 | Aspherical | 1.831 | 0.836 | Plastic | 1.54 | 56.1 | 4.65 |
| 3 | | Aspherical | 5.521 | 0.144 | | | | |
| 4 | Second lens L2 | Aspherical | 27.656 | 0.336 | Plastic | 1.67 | 19.2 | -18.96 |
| 5 | | Aspherical | 8.729 | 0.295 | | | | |
| 6 | Third lens L3 | Aspherical | 12.746 | 0.323 | Plastic | 1.54 | 56.1 | -139.28 |
| 7 | | Aspherical | 10.818 | 0.231 | | | | |
| 8 | Fourth lens L4 | Aspherical | -12.716 | 0.337 | Plastic | 1.54 | 23.5 | -56.69 |
| 9 | | Aspherical | -19.706 | 0.377 | | | | |
| 10 | Fifth lens L5 | Aspherical | 4.832 | 0.530 | Plastic | 1.54 | 56.1 | 9.34 |
| 11 | | Aspherical | 88.658 | 0.328 | | | | |
| 12 | Sixth lens L6 | Aspherical | 2.316 | 0.593 | Plastic | 1.53 | 55.8 | -7.85 |
| 13 | | Aspherical | 1.361 | 0.590 | | | | |
| 14 | Infrared filter L7 | Spherical | Infinite | 0.210 | Glass | 1.52 | 64.2 | |
| 15 | | Spherical | Infinite | 0.610 | | | | |
| 16 | Image surface | Spherical | Infinite | 0.000 | | | | |

Table 8

| | Fourth Embodiment | | | | | |
|---|---|---|---|---|---|---|
| | Aspheric coefficient | | | | | |
| Surface Number | 2 | 3 | 4 | 5 | 6 | 7 |
| K | -8.653E+00 | -8.690E+00 | 2.675E+01 | 1.619E+01 | -8.004E+01 | -8.780E+01 |
| A4 | 1.705E-01 | -1.839E-02 | -2.926E-02 | -2.758E-02 | -7.735E-02 | -7.238E-02 |
| A6 | -1.455E-01 | -3.522E-02 | -8.183E-03 | 1.316E-01 | -7.152E-02 | -3.243E-02 |
| A8 | 1.514E-01 | 1.238E-01 | 1.220E-01 | -4.035E-01 | 6.255E-01 | 3.004E-01 |
| A10 | -1.408E-01 | -2.597E-01 | -2.235E-01 | 1.062E+00 | -2.362E+00 | -8.874E-01 |
| A12 | 1.154E-01 | 3.190E-01 | 2.344E-01 | -1.714E+00 | 4.926E+00 | 1.390E+00 |
| A14 | -7.843E-02 | -2.235E-01 | -1.257E-01 | 1.732E+00 | -6.193E+00 | -1.318E+00 |
| A16 | 3.837E-02 | 7.907E-02 | 1.298E-02 | -1.068E+00 | 4.661E+00 | 7.528E-01 |
| A18 | -1.138E-02 | -8.988E-03 | 1.685E-02 | 3.671E-01 | -1.938E+00 | -2.398E-01 |
| A20 | 1.456E-03 | -9.561E-04 | -5.434E-03 | -5.279E-02 | 3.436E-01 | 3.300E-02 |

(continued)

| Surface Number | 8 | 9 | 10 | 11 | 12 | 13 |
|---|---|---|---|---|---|---|
| K | 8.166E+01 | 6.158E+01 | 1.007E-01 | -9.900E+01 | -1.763E+01 | -6.802E+00 |
| A4 | -8.984E-02 | -9.391E-02 | 8.510E-03 | -5.740E-02 | -2.106E-01 | -9.255E-02 |
| A6 | -5.247E-02 | -9.729E-02 | -8.818E-02 | 7.726E-02 | 8.255E-02 | 3.302E-02 |
| A8 | 3.174E-01 | 3.044E-01 | 8.170E-02 | -8.504E-02 | -1.998E-02 | -8.067E-03 |
| A10 | -5.836E-01 | -4.091E-01 | -5.566E-02 | 5.227E-02 | 3.714E-03 | 1.319E-03 |
| A12 | 6.370E-01 | 3.410E-01 | 2.531E-02 | -2.022E-02 | -5.260E-04 | -1.370E-04 |
| A14 | -4.280E-01 | -1.738E-01 | -7.615E-03 | 4.930E-03 | 5.246E-05 | 7.734E-06 |
| A16 | 1.696E-01 | 5.223E-02 | 1.452E-03 | -7.248E-04 | -3.375E-06 | -1.279E-07 |
| A18 | -3.579E-02 | -8.512E-03 | -1.552E-04 | 5.847E-05 | 1.244E-07 | -6.913E-09 |
| A20 | 3.003E-03 | 5.814E-04 | 6.975E-06 | -1.985E-06 | -1.989E-09 | 2.527E-10 |

It can be derived from the above data that:

| Fourth Embodiment | | | |
|---|---|---|---|
| (TTL-BFL)/f | 0.915 | ET2/CT2 | 1.364 |
| (SAG11+SAG21)*f/EPD | 1.137 | (CT3+CT4+CT5)/f | 0.240 |
| SAG21/CT2 | 0.164 | f12/f | 1.148 |
| TTL/IMGH | 1.237 | f6/f | -1.585 |
| ΣCT/T214 | 0.682 | R12/f | 1.115 |

Fifth Embodiment

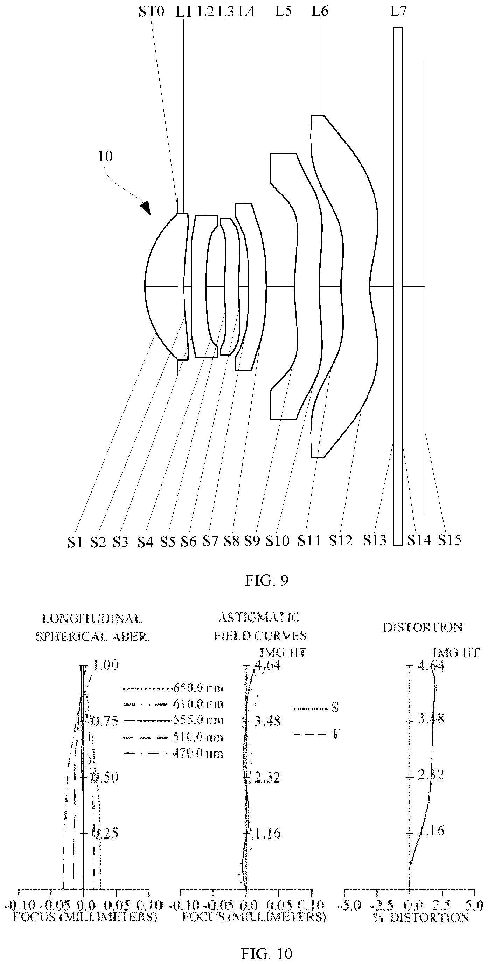

Referring to FIGS. 9 and 10, in the fifth embodiment, the optical system 10 includes, in order from an object side toward an image side: a stop STO, a first lens L1 with a positive refractive power, a second lens L2 with a negative refractive power, a third lens L3 with a positive refractive power, a fourth lens L4 with a positive refractive power, a fifth lens L5 with a negative refractive power, and a sixth lens L6 with a negative refractive power. FIG. 10 includes diagrams of spherical aberration (mm), astigmatism (mm), and distortion (%) of the optical system 10 in the fifth embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is concave at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 9, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the fifth embodiment, in the optical system 10, the effective focal length f=5.89mm, the F-number FNO=2.2, the maximum field of view (diagonal field of view) FOV=76.66°, the half of the diagonal length of the effective pixel area on the image surface S15 ImgH=4.64mm.

In addition, the lens parameters of the optical system 10 are given in Tables 9 and 10. The definition of each parameter can be obtained in the first embodiment, and will not be repeated here.

Table 9

| Fifth Embodiment | | | | | | | | |
|---|---|---|---|---|---|---|---|---|
| f=5.89mm, FNO=2.2, FOV=76.66° | | | | | | | | |
| Surface Number | Surface Name | Surface Type | Y radius (mm) | Thickness (mm) | Material | Refractive index | Abbe number | Focal length (mm) |
| 0 | Object surface | Spherical | Infinite | Infinite | | | | |
| 1 | Stop STO | Spherical | Infinite | -0.749 | | | | |
| 2 | First lens L1 | Aspherical | 1.935 | 0.901 | Plastic | 1.54 | 56.1 | 5.00 |
| 3 | | Aspherical | 5.545 | 0.176 | | | | |
| 4 | Second lens L2 | Aspherical | 24.932 | 0.336 | Plastic | 1.67 | 19.2 | -15.32 |
| 5 | | Aspherical | 7.288 | 0.425 | | | | |
| 6 | Third lens L3 | Aspherical | 7.378 | 0.323 | Plastic | 1.54 | 56.1 | 184.30 |
| 7 | | Aspherical | 7.839 | 0.231 | | | | |
| 8 | Fourth lens L4 | Aspherical | -17.925 | 0.404 | Plastic | 1.54 | 23.5 | 72.63 |
| 9 | | Aspherical | -13.077 | 0.652 | | | | |
| 10 | Fifth lens L5 | Aspherical | 4.340 | 0.571 | Plastic | 1.54 | 56.1 | -72.75 |
| 11 | | Aspherical | 3.776 | 0.501 | | | | |
| 12 | Sixth lens L6 | Aspherical | 2.337 | 0.664 | Plastic | 1.53 | 55.8 | -14.81 |
| 13 | | Aspherical | 1.627 | 0.544 | | | | |
| 14 | Infrared filter L7 | Spherical | Infinite | 0.210 | Glass | 1.52 | 64.2 | |
| 15 | | Spherical | Infinite | 0.521 | | | | |
| 16 | Image surface | Spherical | Infinite | 0.000 | | | | |

Table 10

| Fifth Embodiment | | | | | | |
|---|---|---|---|---|---|---|
| Aspheric coefficient | | | | | | |
| Surface Number | 2 | 3 | 4 | 5 | 6 | 7 |
| K | -8.659E+00 | 1.817E-01 | -9.900E+01 | -1.333E+00 | -9.037E+00 | 3.640E+00 |
| A4 | 1.507E-01 | -2.307E-02 | -3.606E-02 | -1.512E-02 | -4.820E-02 | -4.222E-02 |

(continued)

| Fifth Embodiment | | | | | |
|---|---|---|---|---|---|
| Aspheric coefficient | | | | | |
| Surface Number | 2 | 3 | 4 | 5 | 6 | 7 |
| A6 | -1.332E-01 | 1.747E-02 | 2.288E-02 | 2.195E-02 | 2.109E-02 | 4.611E-03 |
| A8 | 1.664E-01 | -5.486E-02 | -4.587E-03 | 3.751E-02 | -1.059E-01 | -2.096E-02 |
| A10 | -1.840E-01 | 1.080E-01 | 2.136E-02 | -8.869E-02 | 2.466E-01 | -1.802E-03 |
| A12 | 1.557E-01 | -1.266E-01 | -4.493E-02 | 1.347E-01 | -3.702E-01 | 3.267E-02 |
| A14 | -8.999E-02 | 8.980E-02 | 4.489E-02 | -1.386E-01 | 3.486E-01 | -4.564E-02 |
| A16 | 3.271E-02 | -3.792E-02 | -2.421E-02 | 9.507E-02 | -2.005E-01 | 2.991E-02 |
| A18 | -6.635E-03 | 8.730E-03 | 6.802E-03 | -3.842E-02 | 6.408E-02 | -9.486E-03 |
| A20 | 5.601E-04 | -8.424E-04 | -7.699E-04 | 6.986E-03 | -8.728E-03 | 1.149E-03 |
| Surface Number | 8 | 9 | 10 | 11 | 12 | 13 |
| K | 8.114E+00 | 1.252E+01 | -2.229E+00 | -7.692E+01 | -1.618E+01 | -7.004E+00 |
| A4 | -6.275E-02 | -7.237E-02 | -8.227E-02 | -3.606E-02 | -1.539E-01 | -7.789E-02 |
| A6 | 8.113E-02 | 8.073E-02 | 9.031E-02 | 3.905E-02 | 6.320E-02 | 2.760E-02 |
| A8 | -1.997E-01 | -1.530E-01 | -9.545E-02 | -3.064E-02 | -2.015E-02 | -7.795E-03 |
| A10 | 3.034E-01 | 1.976E-01 | 6.141E-02 | 1.339E-02 | 4.869E-03 | 1.479E-03 |
| A12 | -2.945E-01 | -1.642E-01 | -2.613E-02 | -3.746E-03 | -7.844E-04 | -1.735E-04 |
| A14 | 1.741E-01 | 8.645E-02 | 7.265E-03 | 6.800E-04 | 8.025E-05 | 1.154E-05 |
| A16 | -5.843E-02 | -2.725E-02 | -1.272E-03 | -7.617E-05 | -5.016E-06 | -3.461E-07 |
| A18 | 9.947E-03 | 4.649E-03 | 1.282E-04 | 4.741E-06 | 1.750E-07 | -6.366E-10 |
| A20 | -6.483E-04 | -3.292E-04 | -5.666E-06 | -1.249E-07 | -2.615E-09 | 1.912E-10 |

It can be derived from the above data that:

| Fifth Embodiment | | | |
|---|---|---|---|
| (TTL-BFL)/f | 0.912 | ET2/CT2 | 1.490 |
| (SAG11+SAG21)*f/EPD | 1.851 | (CT3+CT4+CT5)/f | 0.220 |
| SAG21/CT2 | 0.262 | f12/f | 1.122 |
| TTL/IMGH | 1.392 | f6/f | -2.514 |
| ΣCT/T214 | 0.617 | R12/f | 0.941 |

Sixth Embodiment

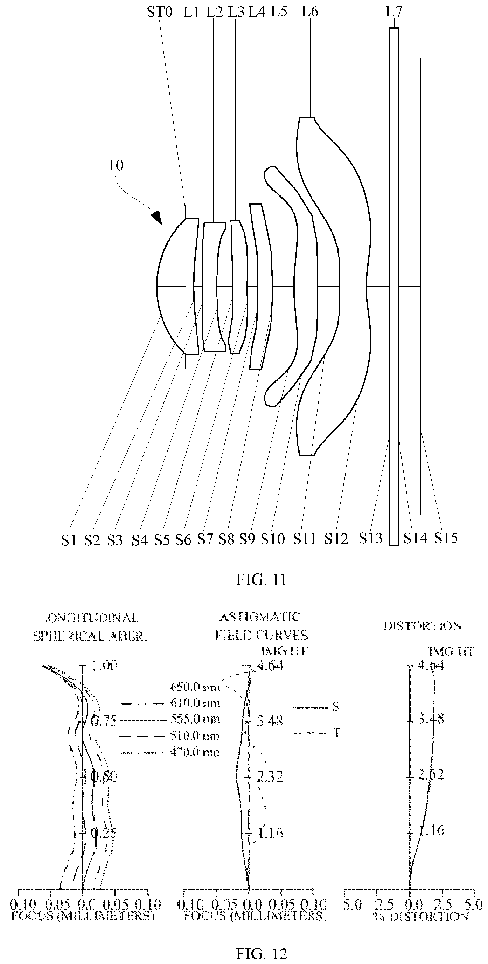

Referring to FIGS. 11 and 12, in the sixth embodiment, the optical system 10 includes, in order from an object side toward an image side: a stop STO, a first lens L1 with a positive refractive power, a second lens L2 with a negative refractive power, a third lens L3 with a negative refractive power, a fourth lens L4 with a positive refractive power, a fifth lens L5 with a positive refractive power, and a sixth lens L6 with a negative refractive power. FIG. 12 includes diagrams of spherical aberration (mm), astigmatism (mm), and distortion (%) of the optical system 10 in the sixth embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is convex at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is concave at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 11, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the sixth embodiment, in the optical system 10, the effective focal length f=5.29mm, the F-number FNO=1.86, the maximum field of view (diagonal field of view) FOV=81.62°, the half of the diagonal length of the effective pixel area on the image surface S15 ImgH=4.64mm.

In addition, the lens parameters of the optical system 10 are given in Tables 11 and 12. The definition of each parameter can be obtained in the first embodiment, and will not be repeated here.

Table 11

| Sixth Embodiment | | | | | | | | |
|---|---|---|---|---|---|---|---|---|
| f=5.29mm, FNO=1.86, FOV=81.62° | | | | | | | | |
| Surface Number | Surface Name | Surface Type | Y radius (mm) | Thickness (mm) | Material | Refractive index | Abbe number | Focal length (mm) |
| 0 | Object surface | Spherical | Infinite | Infinite | | | | |
| 1 | Stop STO | Spherical | Infinite | -0.653 | | | | |
| 2 | First lens L1 | Aspherical | 1.874 | 0.836 | Plastic | 1.54 | 56.1 | 4.72 |
| 3 | | Aspherical | 5.779 | 0.189 | | | | |
| 4 | Second lens L2 | Aspherical | 21.817 | 0.336 | Plastic | 1.67 | 19.2 | -16.57 |
| 5 | | Aspherical | 7.365 | 0.356 | | | | |
| 6 | Third lens L3 | Aspherical | 22.808 | 0.332 | Plastic | 1.54 | 56.1 | -49.28 |
| 7 | | Aspherical | 12.279 | 0.231 | | | | |
| 8 | Fourth lens L4 | Aspherical | 48.258 | 0.337 | Plastic | 1.54 | 23.5 | 45.66 |
| 9 | | Aspherical | -75.238 | 0.491 | | | | |
| 10 | Fifth lens L5 | Aspherical | 4.211 | 0.530 | Plastic | 1.54 | 56.1 | 9.29 |
| 11 | | Aspherical | 23.654 | 0.501 | | | | |
| 12 | Sixth lens L6 | Aspherical | 12.278 | 0.608 | Plastic | 1.53 | 55.8 | -5.76 |
| 13 | | Aspherical | 2.428 | 0.519 | | | | |

(continued)

| | | | | | | | | (mm) |
|---|---|---|---|---|---|---|---|---|
| 14 | Infrared filter L7 | Spherical | Infinite | 0.210 | Glass | 1.52 | 64.2 | |
| 15 | | Spherical | Infinite | 0.500 | | | | |
| 16 | Image surface | Spherical | Infinite | 0.000 | | | | |

Table 12

| Sixth Embodiment | | | | | | |
|---|---|---|---|---|---|---|
| Aspheric coefficient | | | | | | |
| Surface Number | 2 | 3 | 4 | 5 | 6 | 7 |
| K | -8.335E+00 | 3.266E+00 | -5.222E+01 | -2.013E+00 | -9.900E+01 | -9.727E+01 |
| A4 | 1.537E-01 | -1.755E-02 | -2.716E-02 | -2.997E-03 | -7.811E-02 | -8.978E-02 |
| A6 | -1.137E-01 | -3.294E-02 | -1.609E-02 | -7.768E-02 | 6.068E-02 | 8.715E-02 |
| A8 | 1.019E-01 | 1.776E-01 | 1.694E-01 | 5.589E-01 | -2.420E-01 | -1.296E-01 |
| A10 | -7.899E-02 | -4.470E-01 | -3.989E-01 | -1.642E+00 | 5.951E-01 | 5.402E-02 |
| A12 | 5.870E-02 | 6.460E-01 | 5.605E-01 | 2.925E+00 | -9.189E-01 | 1.002E-01 |
| A14 | -3.747E-02 | -5.567E-01 | -4.871E-01 | -3.200E+00 | 8.655E-01 | -1.790E-01 |
| A16 | 1.651E-02 | 2.822E-01 | 2.549E-01 | 2.098E+00 | -4.793E-01 | 1.264E-01 |
| A18 | -4.039E-03 | -7.770E-02 | -7.348E-02 | -7.569E-01 | 1.405E-01 | -4.382E-02 |
| A20 | 3.924E-04 | 8.946E-03 | 8.952E-03 | 1.159E-01 | -1.612E-02 | 6.184E-03 |
| Surface Number | 8 | 9 | 10 | 11 | 12 | 13 |
| K | 9.900E+01 | -9.900E+01 | -3.468E+00 | -7.099E+01 | -9.237E+00 | -1.099E+01 |
| A4 | -9.170E-02 | -8.701E-02 | -3.990E-02 | -6.184E-02 | -2.053E-01 | -8.567E-02 |
| A6 | 4.813E-02 | 4.360E-03 | -2.061E-02 | 3.697E-02 | 7.547E-02 | 3.024E-02 |
| A8 | 2.529E-02 | 8.143E-02 | 3.840E-02 | -2.482E-02 | -1.636E-02 | -7.135E-03 |
| A10 | -1.324E-01 | -1.278E-01 | -3.369E-02 | 1.227E-02 | 2.744E-03 | 1.080E-03 |
| A12 | 1.723E-01 | 1.026E-01 | 1.631E-02 | -4.489E-03 | -3.691E-04 | -9.533E-05 |
| A14 | -1.181E-01 | -4.640E-02 | -4.880E-03 | 1.056E-03 | 3.645E-05 | 3.109E-06 |
| A16 | 4.675E-02 | 1.192E-02 | 8.903E-04 | -1.427E-04 | -2.360E-06 | 1.814E-07 |
| A18 | -1.023E-02 | -1.631E-03 | -8.882E-05 | 9.840E-06 | 8.768E-08 | -1.821E-08 |
| A20 | 9.627E-04 | 9.274E-05 | 3.668E-06 | -2.573E-07 | -1.408E-09 | 4.260E-10 |

It can be derived from the above data that:

| Sixth Embodiment | | | |
|---|---|---|---|
| (TTL-BFL)/f | 0.916 | ET2/CT2 | 1.457 |
| (SAG11+SAG21)*f/EPD | 1.431 | (CT3+CT4+CT5)/f | 0.224 |
| SAG21/CT2 | 0.327 | f12/f | 1.130 |
| TTL/IMGH | 1.288 | f6/f | -1.089 |

(continued)

| Sixth Embodiment | | | |
|---|---|---|---|
| ΣCT/T214 | 0.627 | R12/f | 1.092 |

Seventh Embodiment

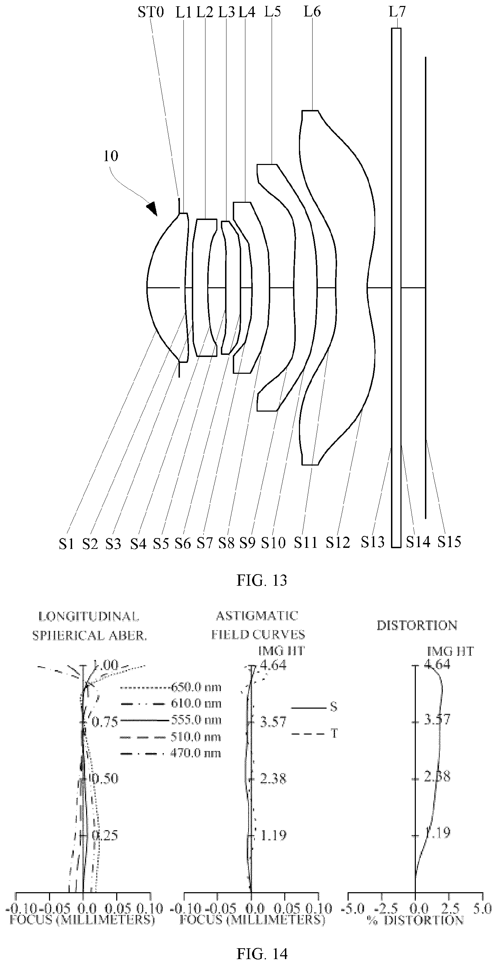

Referring to FIGS. 13 and 14, in the seventh embodiment, the optical system 10 includes, in order from an object side toward an image side: a stop STO, a first lens L1 with a positive refractive power, a second lens L2 with a negative refractive power, a third lens L3 with a positive refractive power, a fourth lens L4 with a negative refractive power, a fifth lens L5 with a positive refractive power, and a sixth lens L6 with a negative refractive power. FIG. 14 includes diagrams of spherical aberration (mm), astigmatism (mm), and distortion (%) of the optical system 10 in the seventh embodiment.

The object-side surface S1 of the first lens L1 is convex at the optical axis and convex at the circumference; and the image-side surface S2 thereof is concave at the optical axis and convex at the circumference.

The object-side surface S3 of the second lens L2 is convex at the optical axis and convex at the circumference; and the image-side surface S4 thereof is concave at the optical axis and concave at the circumference.

The object-side surface S5 of the third lens L3 is convex at the optical axis and concave at the circumference; and the image-side surface S6 thereof is concave at the optical axis and convex at the circumference.

The object-side surface S7 of the fourth lens L4 is concave at the optical axis and concave at the circumference; and the image-side surface S8 thereof is convex at the optical axis and convex at the circumference.

The object-side surface S9 of the fifth lens L5 is convex at the optical axis and concave at the circumference; and the image-side surface S10 thereof is convex at the optical axis and concave at the circumference.

The object-side surface S11 of the sixth lens L6 is convex at the optical axis and convex at the circumference; and the image-side surface S12 thereof is concave at the optical axis and convex at the circumference.

Both the object-side surfaces and the image-side surfaces of the first lens L1, the second lens L2, the third lens L3, the fourth lens L4, the fifth lens L5, and the sixth lens L6 are aspherical. By matching the aspherical shape of each lens in the optical system 10, the problem of distortion of the field of view of the optical system 10 can be effectively solved, and excellent optical effects can also be achieved in the case of small and thin lenses, thereby making the optical system 10 have a smaller volume, which is conducive to the miniaturization of the optical system 10.

The first lens L1, the second lens L2, the third lens L3, the fourth lens L4, the fifth lens L5, and the sixth lens L6 are made of plastic. The adoption of the plastic lens can reduce the manufacturing cost of the optical system 10, and reduce the weight of the optical system 10, which is beneficial to the realization of a thinner and lighter design of the optical system 10.

Referring to FIG. 13, an infrared filter L7 for filtering infrared light, i.e., an infrared cut-off filter is also provided on the image side of the sixth lens L6. In some embodiments, the infrared cut-off filter is a part of the optical system 10, for example, the infrared cut-off filter is assembled on the lens barrel together with each lens. In other embodiments, the infrared cut-off filter is mounted between the optical system 10 and the photosensitive element when the optical system 10 and the photosensitive element are assembled into a camera module.

In the seventh embodiment, in the optical system 10, the effective focal length f=5.53mm, the F-number FNO=1.79, the maximum field of view (diagonal field of view) FOV=79.14°, the half of the diagonal length of the effective pixel area on the image surface S15 ImgH=4.64mm.

In addition, the lens parameters of the optical system 10 are given in Tables 13 and 14. The definition of each parameter can be obtained in the first embodiment, and will not be repeated here.

Table 13

| Seventh Embodiment | | | | | | | | |
|---|---|---|---|---|---|---|---|---|
| f=5.53mm, FNO=1.79, FOV=79.14° | | | | | | | | |
| Surface Number | Surface Name | Surface Type | Y radius (mm) | Thickness (mm) | Material | Refractive index | Abbe number | Focal length (mm) |
| 0 | Object surface | Spherical | Infinite | Infinite | | | | |
| 1 | Stop STO | Spherical | Infinite | -0.712 | | | | |

(continued)

| Seventh Embodiment | | | | | | | | |
|---|---|---|---|---|---|---|---|---|
| f=5.53mm, FNO=1.79, FOV=79.14° | | | | | | | | |
| Surface Number | Surface Name | Surface Type | Y radius (mm) | Thickne ss (mm) | Material | Refractive index | Abbe number | Focal length (mm) |
| 2 | First lens L1 | Aspherical | 1.884 | 0.841 | Plastic | 1.54 | 56.1 | 4.49 |
| 3 | | Aspherical | 6.811 | 0.162 | | | | |
| 4 | Second lens L2 | Aspherical | 25.695 | 0.336 | Plastic | 1.67 | 19.2 | -12.79 |
| 5 | | Aspherical | 6.449 | 0.397 | | | | |
| 6 | Third lens L3 | Aspherical | 10.990 | 0.322 | Plastic | 1.54 | 56.1 | 152.23 |
| 7 | | Aspherical | 12.534 | 0.259 | | | | |
| 8 | Fourth lens L4 | Aspherical | -25.440 | 0.393 | Plastic | 1.54 | 23.5 | -95.76 |
| 9 | | Aspherical | -43.538 | 0.531 | | | | |
| 10 | Fifth lens L5 | Aspherical | 8.520 | 0.513 | Plastic | 1.54 | 56.1 | 9.66 |
| 11 | | Aspherical | -13.552 | 0.410 | | | | |
| 12 | Sixth lens L6 | Aspherical | 4.786 | 0.696 | Plastic | 1.53 | 55.8 | -5.59 |
| 13 | | Aspherical | 1.752 | 0.542 | | | | |
| 14 | Infrared filter L7 | Spherical | Infinite | 0.210 | Glass | 1.52 | 64.2 | |
| 15 | | Spherical | Infinite | 0.539 | | | | |
| 16 | Image surface | Spherical | Infinite | 0.000 | | | | |

Table 14

| Seventh Embodiment | | | | | | |
|---|---|---|---|---|---|---|
| Aspheric coefficient | | | | | | |
| Surface Number | 2 | 3 | 4 | 5 | 6 | 7 |
| K | -9.014E+00 | 3.158E+00 | -9.900E+01 | 1.030E+00 | -8.705E+00 | -3.438E+01 |
| A4 | 1.679E-01 | -2.010E-02 | -2.762E-02 | -1.009E-02 | -5.473E-02 | -5.666E-02 |
| A6 | -1.562E-01 | -2.796E-03 | 2.603E-02 | 5.380E-02 | 1.390E-02 | -6.399E-05 |
| A8 | 1.934E-01 | 2.403E-02 | -7.261E-03 | -9.978E-02 | -1.255E-02 | 5.252E-02 |
| A10 | -2.127E-01 | -4.666E-02 | 9.809E-03 | 2.349E-01 | -4.556E-02 | -1.731E-01 |
| A12 | 1.846E-01 | 5.094E-02 | -1.678E-02 | -3.364E-01 | 1.179E-01 | 2.463E-01 |
| A14 | -1.133E-01 | -3.404E-02 | 1.579E-02 | 2.916E-01 | -1.435E-01 | -2.079E-01 |
| A16 | 4.481E-02 | 1.333E-02 | -8.240E-03 | -1.437E-01 | 9.681E-02 | 1.034E-01 |
| A18 | -1.009E-02 | -2.806E-03 | 2.367E-03 | 3.506E-02 | -3.437E-02 | -2.732E-02 |
| A20 | 9.599E-04 | 2.419E-04 | -2.769E-04 | -2.439E-03 | 4.917E-03 | 2.819E-03 |
| Surface Number | 8 | 9 | 10 | 11 | 12 | 13 |
| K | -9.900E+01 | 9.900E+01 | -5.222E+00 | 2.326E+01 | -9.785E+00 | -6.978E+00 |
| A4 | -8.949E-02 | -8.500E-02 | -3.203E-03 | -3.658E-02 | -2.149E-01 | -8.301E-02 |

(continued)

| Surface Number | 8 | 9 | 10 | 11 | 12 | 13 |
|---|---|---|---|---|---|---|
| A6 | 3.994E-02 | 3.349E-02 | -4.431E-02 | 1.119E-02 | 7.862E-02 | 3.038E-02 |
| A8 | -1.021E-01 | -5.949E-02 | 4.724E-02 | 1.275E-03 | -1.581E-02 | -8.157E-03 |
| A10 | 2.343E-01 | 9.549E-02 | -3.653E-02 | -3.623E-03 | 2.199E-03 | 1.571E-03 |
| A12 | -3.457E-01 | -9.259E-02 | 1.715E-02 | 1.199E-03 | -2.322E-04 | -2.130E-04 |
| A14 | 3.056E-01 | 5.335E-02 | -5.080E-03 | -1.092E-04 | 1.871E-05 | 1.932E-05 |
| A16 | -1.617E-01 | -1.752E-02 | 9.199E-04 | -1.203E-05 | -1.066E-06 | -1.108E-06 |
| A18 | 4.816E-02 | 3.010E-03 | -9.076E-05 | 2.798E-06 | 3.702E-08 | 3.650E-08 |
| A20 | -6.305E-03 | -2.091E-04 | 3.686E-06 | -1.399E-07 | -5.780E-10 | -5.309E-10 |

It can be derived from the above data that:

| Seventh Embodiment | | | |
|---|---|---|---|
| (TTL-BFL)/f | 0.910 | ET2/CT2 | 1.317 |
| (SAG11+SAG21)*f/EPD | 1.381 | (CT3+CT4+CT5)/f | 0.221 |
| SAG21/CT2 | 0.155 | f12/f | 1.102 |
| TTL/IMGH | 1.325 | f6/f | -1.012 |
| ΣCT/T214 | 0.638 | R12/f | 1.231 |

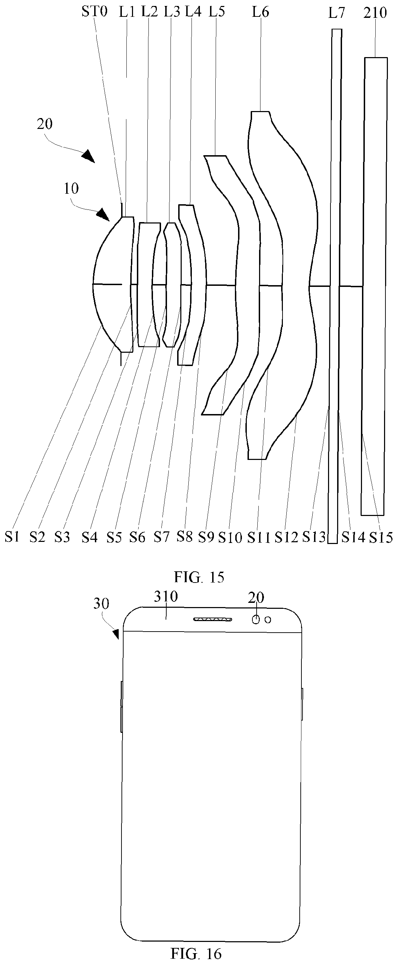

Referring to FIG. 15, in an embodiment of the present disclosure, the optical system 10 and the photosensitive element 210 are assembled to form a camera module 20, and the infrared filter L7 is arranged between the sixth lens L6 and the photosensitive element 210 to filter out infrared light in this embodiment. The photosensitive element 210 may be a CCD (Charge Coupled Device) or a CMOS (Complementary Metal Oxide Semiconductor). By adopting the optical system 10, the camera module 20 can have high-pixel imaging performance and shorten length, and an ultra-thin design, i.e., a miniaturized design can be realized.

In some embodiments, the distance between the photosensitive element 210 and each lens in the optical system 10 is relatively fixed, and the camera module 20 is a fixed focus module. In other embodiments, a driving mechanism such as a voice coil motor may be provided to enable the photosensitive element 210 to move relative to each lens in the optical system 10, thereby achieving a focusing effect. In some embodiments, a driving mechanism can also be provided to drive part of the lenses in the optical system 10 to move, so as to achieve an optical zoom effect.

Referring to FIG. 16, some embodiments of the present disclosure further provide an electronic device 30 to which the camera module 20 is applied. Specifically, the electronic device 30 includes a housing 310 on which the camera module 20 is mounted. The electronic device 30 includes, but is not limited to, terminal equipment such as smart phones, smart watches, e-book readers, in-vehicle camera equipment, monitoring equipment, medical equipment (such as endoscope), tablet computers, biometric equipment (such as fingerprint recognition equipment or pupil recognition equipment, etc.), PDA (Personal Digital Assistant), game consoles, PCs (Personal Computers), and unmanned aerial vehicles, and home appliances with additional camera functions. By adopting the above-mentioned camera module 20, the mounting space of the camera module 20 in the electronic device will be effectively reduced, thereby facilitating the ultra-thin design of the electronic device.

Specifically, in some embodiments, the camera module 20 is applied to a smart phone including a middle frame and a circuit board disposed in the middle frame. The camera module 20 is mounted in the middle frame of the smart phone, and the photosensitive element therein is electrically connected to the circuit board. The camera module 20 can be used as a front camera module or a rear camera module of a smart phone.

The "electronic device" used in the embodiments of the present disclosure may include, but is not limited to, a device configured to be connected via a wired line (e.g., via public switched telephone network (PSTN), digital subscriber line (DSL), digital cable, direct cable connection, and/or another data connection/network) and/or receive/transmit communication signals via a wireless interface (for example, for a cellular network, wireless local area network (WLAN), digital television network such as digital video broadcasting handheld (DVB-H) network, satellite network, and amplitude modulation-frequency modulation (AM-FM) broadcast transmitter, and/or another communication terminal). An electronic device configured to communicate via a wireless interface may be referred to as a "wireless communication terminal", a "wireless terminal" and/or a "mobile terminal". Examples of mobile terminals include, but are not limited to satellite or cellular phones; personal communication system (PCS) terminals that can combine cellular radio phones with data processing, fax, and data communication capabilities; a personal digital assistant (PDA) including radio phones, pagers, and Internet/Intranet access, Web browser, notepad, calendar, and/or global positioning system (GPS) receiver; and conventional laptop and/or handheld receiver or other electronic device including a radio telephone transceiver.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial" , "circumferential", etc. indicate that the orientation or positional relationship is based on the orientation or positional relationship shown in the drawings, which is only for the purpose of facilitating the description of the present disclosure and simplifying the description, rather than indicating or implying that the device or elements must have a specific orientation, be constructed and operated in a specific orientation, and therefore cannot be construed as limitation of the present disclosure.

In addition, the terms "first" and "second" are used for descriptive purposes only, and cannot be understood to indicate or imply relative importance or implicitly indicate the number of technical features indicated. Therefore, the features defined by "first" and "second" may explicitly or implicitly include at least one of the features. In the description of the present disclosure, the term "plurality" means at least two, such as two, three, etc., unless specifically defined otherwise.

In the present disclosure, unless otherwise clearly specified and limited, the term such as "installed", "interconnected", "connected", "fixed" should be understood in a broad sense, for example, it can be a fixed connection or a detachable connection , or integrated; may be a mechanical connection or an electrical connection; may be a direct connection, or may be an indirect connection through an intermediate, may be a communication between two components or an interaction between two components, unless otherwise specified. Those ordinary skilled in the art can understand the specific meanings of the above terms in the present disclosure according to specific situations.

In the present disclosure, unless otherwise clearly specified and defined, the expression that a first feature is "above" or "below" a second feature may indicate that the first and second features are in direct contact, or the first and second features are in indirectly contact through an intermediate. The expression that a first feature is "on", "above", and "over" a second feature may indicate that the first feature is directly or obliquely above the second feature, or only indicates that the horizontal height of the first feature is higher than that of the second feature. The expression that a first feature is "beneath", "below", and "under" the second feature may indicate that the first feature is directly or obliquely below the second feature, or only indicates that the horizontal height of the first feature is lower than that of the second feature.

In the description of the present specification, descriptions with reference to the terms such as "an embodiment", "some embodiments", "examples", "specific examples", or "some examples" mean the specific features, structures, materials or characteristics described in conjunction with these embodiments or examples are included in at least one embodiment or example of the present disclosure. In the present specification, the schematic representations for the above terms do not necessarily refer to the same embodiment or example. Moreover, the described specific features, structures, materials or characteristics can be combined in any one or more embodiments or examples in a suitable manner. In addition, those skilled in the art can combine the different embodiments or examples and the features of the different embodiments or examples described in this specification without contradicting each other.

The technical features of the above embodiments can be combined arbitrarily. For concise description, not all possible combinations of the technical features in the above embodiments are described, but all of which should be considered to be within the scope described in this specification, as long as there is no contradiction between them.

The above-mentioned embodiments are merely illustrative of several embodiments of the present disclosure, which are described specifically and in detail, and cannot be understood to limit the scope of the present disclosure. It should be noted that, for those ordinary skilled in the art, several variations and improvements may be made without departing from the concept of the present disclosure, and all of which are within the protection scope of the present disclosure. Therefore, the protection scope of the present disclosure shall be defined by the appended claims.

**Claims**

1. An optical system comprising, in order from an object side toward an image side:

   a stop;
   a first lens with a positive refractive power;
   a second lens with a negative refractive power, an object-side surface of the second lens being convex at a paraxial position;

a third lens with a refractive power;
a fourth lens with a refractive power;
a fifth lens with a refractive power; and
a sixth lens with a negative refractive power, an image-side surface of the sixth lens being concave at a paraxial position,
wherein the optical system satisfies the following condition:

$$(TTL-BFL)/f < 0.92$$

wherein TTL is a distance on an optical axis from an object-side surface of the first lens toward an imaging surface of the optical system, BFL is a shortest distance in a direction parallel to the optical axis from the image-side surface of the sixth lens toward the imaging surface of the optical system, and f is an effective focal length of the optical system.

2. The optical system according to claim 1, wherein the optical system satisfies the following condition:

$$1mm \leq (SAG11+SAG21)*f/EPD \leq 2mm$$

wherein SAG11 is a sagittal height of the object-side surface of the first lens, SAG21 is a sagittal height of the object-side surface of the second lens, and EPD is a diameter of entrance pupil of the optical system.

3. The optical system according to claim 1, wherein the optical system satisfies the following condition:

$$SAG21/CT2 \leq 0.5$$

wherein SAG21 is a sagittal height of the object-side surface of the second lens, and CT2 is a central thickness of the second lens.

4. The optical system according to claim 1, wherein the optical system satisfies the following condition:

$$\sum CT/T214 \leq 1$$

wherein $\Sigma CT$ is a sum of central thicknesses of all lenses in the optical system, and T214 is a distance on the optical axis from the object-side surface of the first lens toward the image-side surface of the sixth lens.

5. The optical system according to claim 1, wherein the optical system satisfies the following condition:

$$1 \leq ET2/CT2 \leq 2$$

wherein ET2 is an edge thickness of the second lens, and CT2 is a central thickness of the second lens.

6. The optical system according to claim 1, wherein the optical system satisfies the following condition:

$$(CT3+CT4+CT5)/f \leq 0.5$$

wherein CT3 is a central thickness of the third lens, CT4 is a central thickness of the fourth lens, and CT5 is a central thickness of the fifth lens.

7. The optical system according to claim 1, wherein the optical system satisfies the following condition:

$$1 \leq f12/f \leq 1.5$$

wherein f12 is a combined focal length of the first lens and the second lens.

8. The optical system according to claim 1, wherein the optical system satisfies the following condition:

$$-3 \leq f6/f \leq 0$$

wherein f6 is a focal length of the sixth lens.

9. The optical system according to claim 1, wherein the optical system satisfies the following condition:

$$0.5 \leq R12/f \leq 1.5$$

wherein R12 is a radius of curvature of an image-side surface of the first lens on the optical axis.

10. The optical system according to claim 1, wherein the first lens, the second lens, the third lens, the fourth lens, the fifth lens, and the sixth lens are made of plastic.

11. The optical system according to claim 1, wherein an object-side surface of at least one of the first lens, the second lens, the third lens, the fourth lens, the fifth lens, and the sixth lens is aspherical.

12. The optical system according to claim 1, wherein an image-side surface of at least one of the first lens, the second lens, the third lens, the fourth lens, the fifth lens, and the sixth lens is aspherical.

13. The optical system according to claim 1, wherein an object-side surface of the sixth lens has an inflection point.

14. The optical system according to claim 1, wherein the image-side surface of the sixth lens has an inflection point.

15. The optical system according to claim 1, wherein a projection of the stop on the optical axis of the optical system overlaps with a projection of the first lens on the optical axis of the optical system.

16. The optical system according to claim 1, further comprising an infrared filter arranged on an image side of the sixth lens.

17. A camera module, comprising a photosensitive element and the optical system according to any one of claims 1 to 16, the photosensitive element being arranged on an image side of the sixth lens.

18. The camera module according to claim 17, wherein the camera module satisfies the following condition:

$$1.0 \leq TTL/IMGH \leq 1.4$$

IMGH is half of a diagonal length of an effective pixel area on the photosensitive element.

19. An electronic device, comprising a housing and the camera module according to claims 17 or 18 arranged on the housing.

ST0 L1 L2 L3 L4 L5 L6 L7

10

S1 S2 S3 S4 S5 S6 S7 S8 S9 S10 S11 S12 S13 S14 S15

FIG. 1

LONGITUDINAL
SPHERICAL ABER.

ASTIGMATIC
FIELD CURVES

DISTORTION

IMG HT

IMG HT

1.00

4.64

4.64

650.0 nm
610.0 nm
555.0 nm
510.0 nm
470.0 nm

0.75

3.48

3.48

S

T

0.50

2.32

2.32

0.25

1.16

1.16

-0.10 -0.05 0.0 0.05 0.10
FOCUS (MILLIMETERS)

-0.10 -0.05 0.0 0.05 0.10
FOCUS (MILLIMETERS)

-5.0 -2.5 0.0 2.5 5.0
% DISTORTION

FIG. 2

ST0  L1 L2 L3 L4  L5      L6          L7

10

S1  S2  S3   S4   S5  S6   S7  S8  S9 S10 S11 S12 S13  S14  S15

FIG. 3

LONGITUDINAL
SPHERICAL ABER.

ASTIGMATIC
FIELD CURVES
IMG HT
4.64

DISTORTION

IMG HT
4.64

1.00

- - - - - - - 650.0 nm
- · - · - 610.0 nm
———— 555.0 nm
— — — 510.0 nm
- · — · - 470.0 nm

0.75

3.48

3.48

S

T

0.50

2.32

2.32

0.25

1.16

1.16

-0.10 -0.05 0.0  0.05 0.10
FOCUS (MILLIMETERS)

-0.10 -0.05 0.0  0.05 0.10
FOCUS (MILLIMETERS)

-5.0  -2.5  0.0  2.5  5.0
% DISTORTION

FIG. 4

ST0 L1 L2 L3 L4 L5 L6 L7

10

S1 S2 S3 S4 S5 S6 S7 S8 S9 S10 S11 S12 S13 S14 S15

FIG. 5

LONGITUDINAL
SPHERICAL ABER.

ASTIGMATIC
FIELD CURVES
IMG HT

DISTORTION
IMG HT

1.00

————— 650.0 nm
— · · — 610.0 nm
————— 555.0 nm
— — — 510.0 nm
— · — · 470.0 nm

0.75

0.50

0.25

-0.10 -0.05 0.0 0.05 0.10
FOCUS (MILLIMETERS)

4.64

3.48 —— S
- - - T

2.32

1.16

-0.10 -0.05 0.0 0.05 0.10
FOCUS (MILLIMETERS)

4.64

3.48

2.32

1.16

-5.0 -2.5 0.0 2.5 5.0
% DISTORTION

FIG. 6

ST0 L1 L2 L3 L4 L5 L6    L7

10

S1 S2 S3  S4 S5 S6 S7 S8 S9 S10  S11 S12  S13  S14 S15

FIG. 7

LONGITUDINAL
SPHERICAL ABER.

ASTIGMATIC
FIELD CURVES
IMG HT

DISTORTION
IMG HT

1.00

650.0 nm
610.0 nm
555.0 nm
510.0 nm
470.0 nm

0.75

0.50

0.25

4.64

3.48

2.32

1.16

S
T

4.64

3.48

2.32

1.16

-0.10 -0.05 0.0 0.05 0.10
FOCUS (MILLIMETERS)

-0.10 -0.05 0.0 0.05 0.10
FOCUS (MILLIMETERS)

-5.0 -2.5 0.0 2.5 5.0
% DISTORTION

FIG. 8

ST0 L1 L2 L3 L4 L5 L6 L7

10

S1 S2 S3 S4 S5 S6 S7 S8 S9 S10 S11 S12 S13 S14 S15

FIG. 9

LONGITUDINAL
SPHERICAL ABER.

ASTIGMATIC
FIELD CURVES

DISTORTION

IMG HT

IMG HT

1.00

4.64

4.64

650.0 nm
610.0 nm
555.0 nm
510.0 nm
470.0 nm

S
T

0.75

3.48

3.48

0.50

2.32

2.32

0.25

1.16

1.16

-0.10 -0.05 0.0 0.05 0.10
FOCUS (MILLIMETERS)

-0.10 -0.05 0.0 0.05 0.10
FOCUS (MILLIMETERS)

-5.0 -2.5 0.0 2.5 5.0
% DISTORTION

FIG. 10

ST0 L1 L2 L3 L4 L5 L6 L7

10

S1 S2 S3 S4 S5 S6 S7 S8 S9 S10 S11 S12 S13 S14 S15

FIG. 11

LONGITUDINAL
SPHERICAL ABER.

ASTIGMATIC
FIELD CURVES
IMG HT

DISTORTION

IMG HT

1.00

4.64

4.64

650.0 nm
610.0 nm
555.0 nm
510.0 nm
470.0 nm

0.75

3.48

S

3.48

T

0.50

2.32

2.32

0.25

1.16

1.16

-0.10 -0.05 0.0 0.05 0.10
FOCUS (MILLIMETERS)

-0.10 -0.05 0.0 0.05 0.10
FOCUS (MILLIMETERS)

-5.0 -2.5 0.0 2.5 5.0
% DISTORTION

FIG. 12

34

FIG. 13

FIG. 14

ST0 L1 L2 L3 L4 L5    L6        L7    210

20

10

S1  S2  S3  S4  S5  S6  S7  S8  S9 S10  S11 S12 S13  S14 S15

FIG. 15

30      310          20

FIG. 16

## INTERNATIONAL SEARCH REPORT

| International application No. |
|---|
| **PCT/CN2019/123679** |

**A. CLASSIFICATION OF SUBJECT MATTER**

G02B 13/00(2006.01)i; G02B 13/18(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS; CNTXT; VEN; JPABS; USTXT; EPTXT; WOTXT; CNKI: 正光焦, 正屈光, 正折射, 正折光, 负光焦, 负屈光, 负折射, 负折光, 透镜, 镜片, 第1, 第一, 第2, 第二, 第6, 第六, positive, negative, lens, first, second, sixth

**C. DOCUMENTS CONSIDERED TO BE RELEVANT**

| Category* | Citation of document, with indication, where appropriate, of the relevant passages | Relevant to claim No. |
|---|---|---|
| X | CN 107024756 A (LARGAN PRECISION CO., LTD.) 08 August 2017 (2017-08-08) description, paragraphs [0004]-[0009], [0172]-[0188], figure 5 | 1-19 |
| X | CN 106802469 A (AAC TECHNOLOGIES (SINGAPORE) CO., LTD.) 06 June 2017 (2017-06-06) description, paragraphs [0019]-[0098], and figure 1 | 1-19 |
| X | CN 109870786 A (AAC TECHNOLOGIES (SINGAPORE) CO., LTD.) 11 June 2019 (2019-06-11) description, paragraphs [0041]-[0143], and figure 1 | 1-19 |
| X | CN 110018556 A (ZHEJIANG SUNNY OPTICS CO., LTD.) 16 July 2019 (2019-07-16) description, paragraphs [0130]-[0283], and figures 1-19 | 1-19 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 July 2020** | **25 August 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/123679**

| Patent document cited in search report | | | Publication date (day/month/year) | Patent family member(s) | | | Publication date (day/month/year) |
|---|---|---|---|---|---|---|---|
| CN | 107024756 | A | 08 August 2017 | CN | 107024756 | B | 29 January 2019 |
| CN | 106802469 | A | 06 June 2017 | US | 9995913 | B1 | 12 June 2018 |
| | | | | JP | 6437028 | B2 | 12 December 2018 |
| | | | | JP | 2018097338 | A | 21 June 2018 |
| | | | | US | 2018164547 | A1 | 14 June 2018 |
| | | | | CN | 106802469 | B | 31 May 2019 |
| CN | 109870786 | A | 11 June 2019 | None | | | |
| CN | 110018556 | A | 16 July 2019 | None | | | |

Form PCT/ISA/210 (patent family annex) (January 2015)